(19) Europäisches Patentamt
European Patent Office
Office européen des brevets

(11) EP 2 391 584 B1

(12) # FASCICULE DE BREVET EUROPEEN

(45) Date de publication et mention de la délivrance du brevet:
**26.06.2019 Bulletin 2019/26**

(21) Numéro de dépôt: **10708269.5**

(22) Date de dépôt: **02.02.2010**

(51) Int Cl.:
***C02F 1/10*** *(2006.01)* ***C02F 103/08*** *(2006.01)*

(86) Numéro de dépôt international:
**PCT/FR2010/050169**

(87) Numéro de publication internationale:
**WO 2010/086575 (05.08.2010 Gazette 2010/31)**

(54) **UNITE DE PRETRAITEMENT D'EAU AU MOYEN D'UN LIQUIDE FLUORE**

WASSERVORBEHANDLUNGSGERÄT MIT FLUORINIERTER FLÜSSIGKEIT

WATER PRETREATMENT UNIT USING A FLUORINATED LIQUID

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **02.02.2009 FR 0950643**

(43) Date de publication de la demande:
**07.12.2011 Bulletin 2011/49**

(60) Demande divisionnaire:
**11176751.3 / 2 463 239**

(73) Titulaire: **ADIONICS**
**75007 Paris (FR)**

(72) Inventeur: **DE SOUZA, Guillaume**
**92130 Issy-les-Moulineaux (FR)**

(74) Mandataire: **LLR**
**11, boulevard de Sébastopol**
**75001 Paris (FR)**

(56) Documents cités:

| | |
|---|---|
| **EP-A- 1 985 588** | **WO-A1-2008/021123** |
| **GB-A- 1 363 449** | **GB-A- 1 363 449** |
| **US-A- 3 305 456** | **US-A- 4 238 296** |

- **HAGIWARA Y ET AL: "Interaction between near-wall turbulence structure and immiscible droplets falling with wobbling motion in upward water flow" ENERGY, PERGAMON PRESS, OXFORD, GB LNKD- DOI:10.1016/J.ENERGY.2004.04.042, vol. 30, no. 2-4, 1 février 2005 (2005-02-01), pages 181-195, XP025263397 ISSN: 0360-5442 [extrait le 2005-02-01]**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).



Printed by Jouve, 75001 PARIS (FR)

## Description

La présente invention concerne une unité de prétraitement d'eau saline, notamment par traitement thermique et/ou ionique.

Du fait d'une pénurie croissante en eau douce, des méthodes de dessalement des eaux salines (eau de mer, eaux saumâtres, saumures) sont de plus en plus recherchées. Cependant, le coût associé à ces méthodes reste élevé de même que leur impact environnemental. En effet, les méthodes existantes font souvent intervenir des technologies encore coûteuses, (procédés physiques, chimiques, biologiques et/ou membranaires). Une solution pour améliorer ces technologies serait d'augmenter significativement le taux de conversion de l'eau saline en eau douce. Or, les méthodes actuelles de prétraitement des eaux salines, en particulier de l'eau de mer ne permettent pas aujourd'hui d'augmenter ce taux de conversion au-delà de 50% du fait de la présence de sels entartrants. Par « taux de conversion de l'eau saline en eau douce », on entend la fraction d'eau douce produite par unité d'eau saline traitée. Augmenter ce taux de conversion devrait permettre :

- d'augmenter la production relative d'eau douce,
- de réduire la quantité relative d'eau saline à pré-traiter,
- de réduire la taille des unités de dessalement,
- de réduire la consommation énergétique liée au dessalement,
- de réduire la quantité de saumure produite en augmentant la teneur en sel des rejets pour un traitement moins coûteux des rejets, et,
- de réduire l'impact environnemental du fait d'une moindre pollution thermique et/ou chimique.

Cette impossibilité d'augmenter le taux de conversion est principalement due aux problèmes d'entartrage liés aux sels de calcium et de magnésium. En effet, certains de ces sels sont à faible solubilité et d'autres sont à solubilité inverse : ils précipitent dès que la température est trop haute. De plus, pour l'eau de mer, des sels tels que le $CaCO_3$, le $Mg(OH)_2$ ou le $CaSO_4$ précipitent à température ambiante dès que le taux de conversion atteint les 50 %, ce qui représente un stade critique (où la concentration en sel du concentrât est le double de celle du flux d'alimentation). L'entartrage des équipements génère une réduction des sections de passage, une réduction des coefficients de transfert thermique des échangeurs et/ou une obturation des pores des membranes.

Afin de lutter contre cet entartrage, différents traitements ont été proposés :

- la décarbonatation par la chaux $Ca(OH)_2$ : ce procédé de prétraitement présente les inconvénients inhérents à la manipulation et à l'emploi de la chaux. De plus, deux fois plus de sels $CaCO_3$ étant précipités, le volume de boues de rejet à traiter est également multiplié par deux. Ce procédé reste peu satisfaisant dans la mesure où il génère également du carbonate de magnésie difficile à éliminer et doit souvent être complété par l'ajout d'autres produits chimiques, tel que du $Na_2CO_3$, destinés à faire précipiter les autres ions présents dans l'eau à traiter.
- la décarbonatation par l'acide : comme précédemment, cette technique présente des inconvénients relatifs à la manipulation et à l'ajout régulier d'acide forts ($H_2SO_4$ HCl,...). En outre, cette technique nécessite l'utilisation d'un inhibiteur de corrosion, ajoutant ainsi un coût et une pollution chimique supplémentaires.
- la germination : cette technique vise à provoquer les dépôts de tartre sur des germes cristallins que l'on a introduits dans l'eau à traiter. Cette technique présente un risque de prise en masse au cours des arrêts, ce qui explique vraisemblablement son faible développement.
- l'adoucissement sur résine : avec cette technologie, les ions calcium $Ca^{2+}$ et $Mg^{2+}$ sont remplacés grâce à l'utilisation de résines échangeuses d'ions, ces résines étant par la suite régénérées. Les inconvénients relatifs à ce procédé sont son emploi en cycle généralement discontinu, des rendements de fixation et de régénération de la résine bas et son coût d'installation élevé;
- l'emploi de produits tartrifuges : cette technique, la plus utilisée, consiste à injecter à très faible dose (quelques ppm) des polyphosphates, organophosphates ou des polymères carboxyliques afin d'éviter ou de minimiser les dépôts de tartre. Cette technique présente des inconvénients dus à la manutention et au dosage des produits tartrifuges ainsi qu'à leur faible résistance aux températures supérieures à 70°C. En outre, ces produits peuvent augmenter l'encrassement par les bio-organismes et ne permettent pas d'augmenter significativement le taux de conversion en eau.

Pour lutter contre les phénomènes d'encrassement, il existe également des solutions de clarification et de filtration. Par « encrassement », on vise l'accumulation gélatineuse de boues sur les parois d'une conduite, résultant de l'activité biologique des organismes présents dans l'eau. Ces solutions consistent généralement en l'utilisation de filtres à sable, de filtres à bougies, d'ultrafiltration ou de microfiltration, de coagulation et de floculation, de décantation et de traitement d'oxydation par chloration choc, US4238296 divulgue un liquide fluoré non miscible à l'eau dans un échangeur

de chaleur.

Enfin, pour lutter contre la corrosion résultant de la présence de dioxygène et de dioxyde de carbone dissous, d'une teneur élevée en ions chlorure, d'une conductivité élevée de l'eau ou d'une pollution, diverses techniques peuvent être utilisées parmi lesquelles l'utilisation d'un dé-aérateur, la décarbonatation à l'acide ($H_2SO_4$, HCl), l'utilisation de métaux en acier inoxydable pour les circuits à haute pression, et l'utilisation d'agents chimiques anti-mousse.

Toutes ces solutions nécessitent la mise en oeuvre de produits chimiques dont la manutention et le traitement avant rejet dans l'environnement sont sources de problèmes. En outre, cela génère une augmentation notable des coûts.

L'invention porte donc sur une unité de prétraitement permettant une nette augmentation du taux de conversion de l'eau à traiter en eau douce grâce à la mise en oeuvre d'un échangeur à contact direct permettant d'obtenir une extraction de certains ions et/ou une précipitation contrôlée de certains sels de métaux légers (métaux alcalins ou alcalino-terreux, béryllium, aluminium, magnésium) sous une forme carbonate (voire sulfate) pour éviter une précipitation entartrante tout en minimisant l'usage des réactifs chimiques usuels.

Un échangeur à contact direct forme un dispositif industriel assurant un transfert entre deux fluides en l'absence de paroi matérielle séparant les deux fluides. Ce transfert peut notamment être thermique (échangeur de chaleur à contact direct) et/ou ionique (échangeur d'ions à contact direct). En l'espèce, l'échangeur de chaleur et/ou d'ions à contact direct vise un transfert thermique et/ou ionique entre une phase fluorée et l'eau à traiter. Par « eau à traiter », on entend les eaux salines (eau de mer, eaux saumâtre, saumures) et les eaux résiduelles (eaux dont la pollution et l'impureté minérale ou biologique résultent directement ou indirectement d'une activité humaine). De manière avantageuse, l'échangeur selon l'invention est particulièrement adapté au traitement d'eaux polluées par des hydrocarbures. Un échangeur comprend par exemple une colonne.

Plus particulièrement, on prévoit donc selon l'invention une unité de prétraitement d'eau, en particulier d'eau saline, comprenant un échangeur à contact direct dont la phase fluorée continue ou dispersée comprend un liquide fluoré non miscible à l'eau de densité supérieure à 1,25. L'échangeur à contact direct est ionique. En effet, selon la phase fluorée utilisée, le transfert opéré entre la phase fluorée et l'eau à traiter est.

Le liquide fluoré non miscible à l'eau est par exemple hydrophobe.

L'unité de prétraitement selon l'invention permet d'améliorer notablement le taux de conversion en eau douce des procédés de dessalement par l'emploi d'un prétraitement thermique particulièrement efficace remplaçant au moins pour partie un prétraitement chimique.

En particulier, cette unité de prétraitement va permettre de mettre en oeuvre, en aval, des procédés fonctionnant à plus haute température tels que des procédés de distillation à effets multiples (MED), de distillation flash multiétagée (MSF) ou à membrane, pour une amélioration en productivité et en efficacité énergétique. De tels procédés combinés à l'unité de prétraitement selon l'invention vont permettre d'accéder à des taux de conversion dépassant 50 % et pouvant atteindre 90 %.

L'utilisation d'un échangeur d'ions (ionique) permet, dans le cas du prétraitement d'une eau chargée en ions (lorsque l'échangeur ionique à contact direct est un échangeur d'absorption), d'échanger les ions depuis l'eau à traiter chargée en ions vers la phase fluorée. Ainsi, l'eau prétraitée est adoucie et/ou dessalée en fonction des ions échangés ou extraits depuis l'eau à traitée vers la phase fluorée.

L'utilisation d'un échangeur d'ions (ionique) permet également, dans le cas de la régénération d'une phase fluorée chargée en ions (lorsque l'échangeur ionique à contact direct est un échangeur de régénération), d'échanger les ions depuis la phase fluorée chargée en ions vers une eau de régénération. Ainsi, la phase fluorée est déchargée de ses ions et peut être réutilisée pour servir de phase fluorée pour le prétraitement d'une eau chargée en ions.

Avantageusement, le liquide fluoré non miscible à l'eau est défini par un rapport m/p égal à un réel inférieur ou égal à 1 avec m le nombre d'atomes d'hydrogène et p le nombre d'atomes de fluor contenus dans la molécule du liquide fluoré non miscible à l'eau.

Le liquide fluoré non miscible à l'eau de la phase fluorée est un composé de formule brute $C_nH_mF_pN_qO_xS_y$ dans laquelle :

- C, H, F, N, O, S représentent respectivement un atome de carbone, d'hydrogène, de fluor, d'azote, d'oxygène et de soufre,
- n est un nombre entier compris entre 3 et 25, de préférence entre 3 et 12, bornes incluses,
- m est un nombre entier compris entre 0 et 27, de préférence entre 0 et 20, bornes incluses,
- p est un nombre entier compris entre 5 et 54, de préférence entre 5 et 27, bornes incluses,
- q est un nombre entier compris entre 0 et 6, de préférence entre 0 et 3, bornes incluses,
- x est un nombre entier compris entre 0 et 10, de préférence entre 0 et 7, bornes incluses, et
- y est un nombre entier compris entre 0 et 6, de préférence entre 0 et 3, bornes incluses.

L'invention vise en particulier les liquides appartenant à une des familles suivantes : les liquides perfluorés (PFC) ou hydrofluorés (HFC) et leurs dérivés et les liquides ioniques.

Elle vise plus particulièrement les perfluoroéthers (PFE), les hydrofluoroéthers (HFE), les perfluoropolyéthers (PFPE), les hydrofluoropolyéthers (HFPE), les amines perfluorées (PFA), de préférence ternaires (PFTA), les amines hydrofluorées (HFA), de préférence ternaires (HFTA), les polyamines perfluorées (PFPA), Les polyamines hydrofluorées (HFPA), les perfluorothioéthers (PFTE), les hydrofluorothioéthers (HFTE), les perfluoropolythioéthers (PFPTE), les hydrofluoropolythioéthers (HFPTE), les hydrofluorothioéthersamines (HFTEA), les perfluoroazacyclohexanes, les perfluoroétheramines, les hydrofluoroétheramines (HFEA), les perfluorothioétheramines, les perfluoroéthylènes alcools, les perfluorocyclohexanes, les hydrofluorocyclohexanes, les perfluorodecalins, les perfluorocycloethers, les hydrofluorocycloethers, les perfluorocyclothioethers, les hydrofluorocyclothioethers et les liquides ioniques hydrophobes qui peuvent être basés sur les ions bis(trifluoromethylsulfonyl)imide ($TF2N^-$).

Ces molécules perfluorées ou hydrofluorées pourront être à chaîne carbonée droite ou ramifiée. De préférence, ces molécules seront à chaîne carbonée droite afin de favoriser une température d'ébullition maximale et de minimiser la miscibilité à l'eau. De manière avantageuse, les éventuels atomes d'hydrogènes seront préférentiellement placés sur les fonctions acides ou amines ou à défaut sur une chaîne carbonée à un ou deux atomes de carbone.

De plus, ces fluides sont à la fois non toxiques, non inflammables, inertes, non destructeurs de la couche d'ozone, non polaires ou faiblement polaires, incolores et inodores, voire non bioaccumulables et biodégradables.

Par « perfluorocarbures », on entend les composés de formule brute $C_nF_p$, dans laquelle C, n, F et p sont définis tels que précédemment.

Par « dérivés de perfluorocarbures », on vise plus particulièrement des composés perfluorocarbures substitués par au moins un hétéroatome sélectionné parmi l'azote, l'oxygène et/ou le soufre. Il s'agit donc de composés de formules brutes $C_nF_pN_q$, $C_nF_pO_x$, $C_nF_pS_y$, $C_nF_pN_qO_x$, $C_nF_pO_xS_y$, $C_nF_pN_qS_y$, $C_nF_pN_qO_xS_y$, dans lesquelles C, F, N, O, S, n, p, q, x, y sont tels que définis précédemment. De façon plus préférentielle, il s'agit de perfluorocyclohexanes, de perfluorodécalins, de perfluoroalkylamines, -dialkylamine ou - trialkylamines, de perfluoroéthers, de perfluorocycloéthers, de perfluoropolyéthers, de perfluorothioéthers ou de perfluoropolythioéthers.

De manière préférentielle, on choisira le liquide de la phase fluorée parmi les liquides hydrofluorés (ou hydrofluorocarbures) pour leur impact environnemental relativement faible, notamment en termes de participation au phénomène de réchauffement climatique.

Par « hydrofluorocarbures », on vise les composés de formule brute $C_nH_mF_p$, dans laquelle C, H, F, n, m et p sont tels que définis précédemment.

De préférence, le liquide de la phase fluorée comporte un composé hydrofluorocarbure ou dérivé.

Par « dérivés d'hydrofluorocarbures », on entend des composés hydrofluorocarbures comportant au moins un hétéroatome sélectionné parmi l'azote, l'oxygène et/ou le soufre. Il s'agit plus particulièrement de composés de formules brutes $C_nH_mF_pN_q$, $C_nH_mF_pO_x$, $C_nH_mF_pS_y$, $C_nH_mF_pO_xS_y$, $C_nH_mF_pN_qS_y$, $C_nH_mF_pN_qO_x$ et $C_nH_mF_pN_qO_xS_y$ dans lesquelles C, H, F, N, O, S et n, m, p, q, x, y sont tels que définis précédemment. De préférence, ces composés sont l'hydrofluorocyclohexane, les hydrofluorodécalins, les hydrofluoroéthers, les hydrofluorocycloéthers, les hydrofluoropolyéthers, les hydrofluorothioéthers, les hydrofluoropolythioéthers, les hydrofluoroalkylamines, les hydrofluorodialkylamines, les hydrofluoropolyalkylamines, les hydrofluorohydrazines, les hydrofluorothioéthéralkylamines, les hydrofluoroéthéramines, les hydrofluoroétherpolyamines et les liquides ioniques.

On choisira des perfluorocarbures et hydrofluorocarbures saturés en hydrogène et fluor. Les composés seront choisis de manière telle que pour m, p, n et q tels que définis précédemment:

- $m+p=2n+q+2$, pour les composés ne comportant pas de cycle,
- $m+p=2n+q$ , pour les composés comportant un cycle ou une liaison double avec l'oxygène ou le souffre, et,
- $m+p=2n+q$, pour les composés comportant deux cycles ou deux liaisons doubles avec l'oxygène ou le souffre ou un cycle et une liaison double avec l'oxygène ou un souffre.

Les composés préférés selon l'invention sont en particulier décrits dans le tableau 1 de l'exemple 1 ci-après (« liquide fluoré hydrophobe »).

L'échangeur est un échangeur d'ions (ionique) dans lequel la phase fluorée comporte, en outre, un liquide fluoré d'échange ionique comprenant un ou plusieurs tensioactif(s) fluoré(s) ionique(s) et/ou non ionique(s). De préférence, le liquide fluoré d'échange ionique est constitué d'un ou plusieurs tensioactif(s) fluoré(s) ionique(s) et/ou non ionique(s). Dans ce mode de réalisation, on utilise principalement le liquide fluoré non miscible à l'eau pour sa fonction de solvant, mais pas pour sa fonction d'échange thermique. Dans ce cas, la phase fluorée est sous forme continue ou dispersée.

Dans un autre mode de réalisation, l'échangeur est un échangeur de chaleur et d'ions, c'est-à-dire un échangeur thermique et ionique. Dans ce cas, on utilise le liquide fluoré non miscible à l'eau pour sa fonction d'échange thermique et de solvant. Dans ce ou ces cas, la phase fluorée est sous une forme continue.

Un tensioactif fluoré non ionique pourra assurer simultanément une fonction d'échange ionique et de limitation de la coalescence des gouttes d'eau dans la phase fluorée. Dans le cas où la phase fluorée comprend plusieurs

tensioactifs fluorés non ioniques, chaque tensioactif fluoré non ionique pourra assurer simultanément une fonction d'échange ionique et de limitation de la coalescence des gouttes d'eau dans la phase fluorée. Un tensioactif fluoré non ionique pourra assurer uniquement une fonction d'échange ionique ou une fonction de limitation de la coalescence des gouttes d'eau dans la phase fluorée. Dans le cas où la phase fluorée comprend plusieurs tensioactifs fluorés non ioniques, chaque tensioactif fluoré non ionique pourra assurer uniquement une fonction d'échange ionique ou une fonction de limitation de la coalescence des gouttes d'eau dans la phase fluorée. Enfin, un ou plusieurs tensioactifs non ioniques pourront assurer uniquement une fonction d'échange ionique ou une fonction de limitation de la coalescence des gouttes d'eau dans la phase fluorée alors que un ou plusieurs tensioactifs non ioniques pourront assurer simultanément une fonction d'échange ionique et une fonction de limitation de la coalescence des gouttes d'eau dans la phase fluorée.

Dans le cas d'un prétraitement (par exemple par absorption) des ions d'une eau à traiter, le tensioactif fluoré ionique et/ou non ionique assure une fonction d'échange ou d'extraction ionique, c'est-à-dire d'échange ou d'extraction des ions depuis l'eau à traiter vers la phase fluorée. Inversement, dans le cas d'une régénération d'une phase fluorée chargée en ions, la phase fluorée chargée en ions provenant, par exemple, du traitement des ions d'une eau à traiter, le tensioactif fluoré ionique et/ou non ionique assure une fonction d'échange ou d'extraction ionique depuis la phase fluorée chargée en ions vers une eau de régénération de façon à régénérer la phase fluorée.

Selon un mode de réalisation préférentiel, la phase fluorée comportera de 0,5 à 30% en volume de tensioactifs fluorés ioniques et/ou des tensioactifs fluorés non ioniques, préférentiellement, de 1 à 5%, bornes incluses de tensioactifs fluorés ioniques et/ou des tensioactifs fluorés non ioniques.

De préférence, le liquide fluoré d'échange ionique comprend un liquide (ou tensioactif) échangeur fluoré anionique (ELFA) et/ou un liquide (ou tensioactif) échangeur fluoré cationique (ELFC). En variante, le liquide fluoré d'échange ionique comprend plusieurs ELFA et/ou ELFC. De tels composés peuvent être choisis, par exemple, parmi les sels de carboxylate perfluoré (perfluorocarboxylate), les sels de carboxylate hydrofluoré, les sels d'alkoxydes perfluorés (perfluoroalkoxyde), les sels d'alkoxydes hydrofluorés, les sels de dialkoxydes perfluorés (perfluorodialkoxyde), les sels de dialkoxydes hydrofluorés, les sels de carboximidates perfluorés (perfluorocarboximidate), les sels de carboximidates hydrofluorés, les sels de sulfonate perfluorés (perfluorosulfonates), les sels de sulfonate hydrofluorés, les sels de sulfate perfluorés (perfluorosulfates), les sels de sulfate hydrofluorés, les sels d'éthersulfonate perfluorés (perfluoroéthersulfonates), les sels d'éther sulfonate hydrofluorés, les sels d'alkylammoniums perfluorés (perfluoroalkylammonium), les sels d'alkylammoniums hydrofluorés, les sels de dialkylimidazoliums perfluorés (perfluorodialylimidazolium), les sels de dialkylimidazoliums hydrofluorés, les sels d'alkylphosphoniums perfluorés (perfluoroalkylphosphonium), les sels d'alkylphosphoniums hydrofluorés, les sels de dialkyloxazolidinium perfluorés (perfluorodialkyloxazolidinium), les sels de dialkyloxazolidinium hydrofluorés, les sels de dialkyl-1-aza-3,5-dioxacyclohexane perfluorés (perfluorodialkyl-1-aza-3,5-dioxacyclohexane), les sels de dialkyl-1-aza-3,5-dioxacyclohexane hydrofluorés, les sels d'alkylborates perfluorés (perfluoroborates), les sels d'alkylborates hydrofluorés, les sels de dialkyldiboracyclopentadiènes perfluorés (perfluorodialkyldiboracyclopentadiene), les sels de dialkyldiboracyclopentadiènes hydrofluorés, les sels de dialkyloxaboralidinium perfluorés (perflorodialkyloxaboralidinium), les sels de dialkyloxaboralidinium hydrofluorés, les sels de dialkyl-1-bora-3,5-dioxacyclohexane perfluorés (perfluorodialkyl-1-bora-3,5-dioxacyclohexane) et les sels de dialkyl-1-bora-3,5-dioxacyclohexane hydrofluorés. A titre d'exemple, l'exemple 3 comporte une liste de tensioactifs fluorés ioniques.

De préférence, les tensioactifs fluorés non ioniques sont choisis parmi les éthers couronnes hydrofluorés ou perfluorés, les perfluoroaldéhydes, les hydrofluoroaldéhydes, les hydrofluoroétheraldéhydes et les hydrofluorothioéthersaldéhydes dont des exemples sont donnés dans l'exemple 2.

Avantageusement, le tensioactif fluoré ionique et/ou non ionique d'échange ou d'extraction ionique est défini par un rapport a/b égal à un réel inférieur ou égal à 1 avec a le nombre d'atomes d'hydrogène et b le nombre d'atomes de fluor contenus dans la molécule du tensioactif fluoré ionique et/ou non ionique. Ainsi, ces tensioactifs fluorés présentent une inflammabilité relativement faible et une solubitilité relativement élevée dans le liquide fluoré non miscible à l'eau de la phase fluorée qui sert alors de solvant et/ou de liquide d'échange thermique.

De préférence:

- Le liquide échangeur fluoré anionique comprend une tête polaire cationique comprenant un hétéroatome d'azote et/ou de phosphore et/ou d'oxygène et/ou de souffre.
- Le liquide échangeur fluoré cationique comprend une tête polaire anionique comprenant un hétéroatome de bore et/ou d'aluminium et/ou d'oxygène et/ou de souffre.

De tels liquides échangeurs fluorés anioniques et cationiques permettent d'éviter la précipitation des paires constituées par l'échangeur liquide fluoré et l'ion extrait de l'eau à traiter.

La figure 4 illustre le phénomène à l'origine de l'échange ionique. En particulier, elle représente une goutte d'eau contenant au moins des ions sodium et calcium, immergée dans un liquide fluoré hydrophobe (LFH) dans lequel sont dissous, à hauteur de quelques pourcents, des tensioactifs fluorés ioniques comprenant un liquide échangeur fluoré

cationique (ELFC). Un tel liquide échangeur comprend une chaîne fortement fluorée, hydrophobe et à tête anionique hydrophile. Ces tensioactifs à têtes anioniques viennent se placer à l'interface Eau-LFH. Lors du déplacement à contre-courant de la goutte d'eau dans le LFH, celle-ci entre en contact avec de nombreuses molécules de tensioactifs à têtes anioniques ce qui autorise un échange de cations à l'interface Eau-LFH, entre ces tensioactifs à têtes anioniques et l'eau. Dans le cas du prétraitement (par exemple par absorption) des ions d'une eau chargée à traiter (lorsque l'échangeur ionique à contact direct est un échangeur d'absorption), il y a, par exemple, extraction des cations calcium de l'eau par échange de cations entre la phase fluorée et l'eau par l'intermédiaire de ces tensioactifs à têtes anioniques solubles dans le LFH mais non solubles dans l'eau. Au contraire, dans le cas de la régénération d'une phase fluorée chargée en ions (lorsque l'échangeur ionique à contact direct est un échangeur de régénération), il y a apport des calcium à l'eau de régénération.

L'utilisation d'une phase fluorée comportant ce type de liquide fluorée d'échange ionique permet d'éliminer les cations bivalents ($Ca^{2+}$, $Mg^{2+}$, $Sr^{2+}$, $Ba^{2+}$, ...) et trivalents ainsi que des métaux potentiellement présents dans l'eau à traiter ($Fe^{2+}$, $Mn^{2+}$, $Zn^{2+}$, ...). En particulier, les ions responsables de la dureté de l'eau et les métaux nuisibles sont ainsi extraits. A titre d'exemple, on peut donner la réaction suivante :

$$2\ [ELFC][Na^+]_{phase\ fluo.} + [Ca^{2+}]_{eau} <=> [ELFC]_2[Ca^{2+}]_{phase\ fluo.} + 2\ [Na^+]_{eau}$$

La figure 5 illustre le même phénomène dans le cas d'une goutte d'eau contenant au moins des ions carbonates, immergée dans le même liquide fluoré hydrophobe (LFH) dans lequel sont dissous, à hauteur de quelques pourcents, des tensioactifs fluorés ioniques comprenant un liquide échangeur fluoré anionique (ELFA). Un tel liquide échangeur comprend une chaîne fortement fluorée, hydrophobe et à tête cationique hydrophile. De la même manière qu'à la figure 4, les tensioactifs à têtes cationiques viennent se placer à l'interface Eau-LFH et on observe un échange d'anions à l'interface Eau-LFH, entre ces tensioactifs à têtes cationiques et l'eau. Dans le cas du prétraitement (par exemple par absorption) des ions d'une eau à traiter (lorsque l'échangeur ionique à contact direct est un échangeur d'absorption), il y a, par exemple, extraction des ions carbonates de l'eau par échange d'anions entre la phase fluorée et l'eau par l'intermédiaire de ces tensioactifs à têtes cationiques solubles dans le LFH mais non solubles dans l'eau. Au contraire, dans le cas de la régénération d'une phase fluorée chargée en ions (lorsque l'échangeur ionique à contact direct est un échangeur de régénération), il y a apport des ions carbonates à l'eau de régénération.

L'utilisation d'une phase fluorée comportant ce type de liquide fluoré d'échange ionique permet d'éliminer les anions monovalents ($NO_3^-$) et bivalents ($CO_3^{2-}$, $SO_4^{2-}$ ...) responsables notamment de la dureté de l'eau. A titre d'exemple, on peut donner la réaction suivante :

$$2\ [ELFA][Cl^-]_{phase\ fluo.} + [CO_3^{2-}]_{eau} <=> [ELFA]_2[CO_3^{2-}]_{phase\ fluo.} + 2\ [Cl^-]_{eau}$$

La figure 6 illustre un échange ionique utilisant simultanément des liquides échangeurs fluorés cationiques (ELFC) et des liquides échangeurs fluorés anioniques (ELFA). Afin d'assurer la neutralité électronique dans la phase continue, les ELFC et ELFA s'associent en paire d'ions échangeurs dans la phase fluorée. Ces paires d'ions échangeurs viennent se placer à l'interface Eau-LFH et, du fait de la plus grande affinité de l'ELFC et l'ELFA respectivement pour les cations et les anions de l'eau à traiter, se dissocient, ce qui autorise un échange à l'interface Eau-LFH, entre respectivement les ELFC et ELFA et des cations et des anions de l'eau à traiter. Dans le cas du prétraitement (par exemple par absorption) des ions d'une eau à traiter (lorsque l'échangeur ionique à contact direct est un échangeur d'absorption), il y a extraction des cations et des anions de l'eau par l'intermédiaire de ces ions échangeurs solubles dans le LFH mais non solubles dans l'eau. Au contraire, dans le cas de la régénération d'une phase fluorée chargée en ions (lorsque l'échangeur ionique à contact direct est un échangeur de régénération), il y a apport des cations et des anions à l'eau.

L'utilisation d'une phase fluorée comportant ce type de liquide d'échange ionique permet d'extraire de l'eau les cations et les anions monovalents, bivalents et trivalents. A titre d'exemple, on peut donner les réactions suivantes permettant de dessaler et/ou de diminuer la dureté de l'eau:

$$[ELFA][ELFC]_{phase\ fluo.} + [Na^+]_{eau} + [Cl^-]_{eau} <=> [ELFA][Cl^-]_{phase\ fluo.} + [ELFC][Na^+]_{phase\ fluo.}$$

$$2\ [ELFA][ELFC]_{phase\ fluo.} + [CO_3^{2-}]_{eau} + [Ca^{2+}]_{eau} <=> [ELFA]_2[CO_3^{2-}]_{phase\ fluo.} + [ELFC]_2[Ca2^+]_{phase\ fluo.}$$

On peut également utiliser un liquide échangeur fluoré non ionique [ELFNI] seul ou en combinaison avec un ou plusieurs ELFA ou ELFC. L'ELFNI échange ou extrait les ions depuis la phase aqueuse vers la phase fluorée par complexation des ions. Dans le cas d'un ELFNI, on peut donner la réaction suivante permettant de dessaler et/ou de diminuer la dureté de l'eau:

$$[\mathrm{ELFNI}]_{\text{phase conti.}} + [\mathrm{Na}^+]_{\text{eau}} <=> [\mathrm{ELFNI}][\mathrm{Na}^+]_{\text{phase cont.}}$$

Avantageusement, l'unité de prétraitement selon l'invention comportera une unité de cristallisation. Cette unité de cristallisation pourra par exemple prendre la forme d'un bassin de cristallisation à saturation avec ou sans germination ou coagulants et à clarification.

De préférence, l'échangeur de chaleur à contact direct de l'unité de prétraitement selon l'invention comportera un dispositif de recyclage de la phase continue. Ce dispositif de recyclage permet à la fois une économie en termes de consommables, mais également une économie d'énergie thermique. Dans le cas où la phase fluorée comporte au moins un liquide fluoré à tête ionique, le dispositif de recyclage comportera en outre un dispositif de régénération du liquide fluoré à tête échangeuse d'ions. Le dispositif de régénération sera de préférence une colonne de régénération à contact direct employant au moins une partie de l'eau traitée ou de la saumure issue du système de prétraitement ou de dessalement pour que soit réalisée la réaction inverse.

On propose également un procédé de prétraitement de l'eau mettant en oeuvre une unité de prétraitement selon l'invention et comprenant les étapes suivantes :

- introduction de la phase fluorée au niveau d'une extrémité supérieure d'une des parties de l'échangeur et introduction de l'eau au niveau d'une extrémité inférieure d'une des parties de l'échangeur de façon à réaliser un échange de chaleur et/ou d'ions à contre-courant entre l'eau ascendante et la phase fluorée descendante, et,
- récupération de l'eau prétraitée.

De préférence, le procédé peut comprendre une étape de compression de l'eau à traiter, la compression ayant lieu à une pression prédéterminée. En outre, l'introduction de l'eau peut être réalisée sous pression, par exemple sous forme de gouttes d'eau.

Dans un mode de réalisation, le procédé comprend, en outre, une étape d'introduction de la phase fluorée sous forme continue et dans lequel l'introduction de l'eau est faite sous forme dispersée. On utilise ce procédé dans le cas d'un échangeur de chaleur et/ou d'ions.

Dans un autre mode de réalisation, le procédé comprend, en outre, une étape d'introduction de la phase fluorée sous forme dispersée et dans lequel l'introduction de l'eau est faite sous forme continue. On utilise ce procédé dans le cas d'un échangeur uniquement ionique.

De plus, lorsque le procédé met en oeuvre une unité de prétraitement comprenant un échangeur d'ions, le procédé peut comporter, en outre, les étapes suivantes:

- récupération de la phase fluorée obtenue au niveau de l'extrémité inférieure d'un premier échangeur, dit de prétraitement,
- introduction de la phase fluorée récupérée au niveau d'une extrémité supérieure d'une des parties d'un second échangeur, dit de régénération, de l'unité de prétraitement,
- introduction d'une eau de régénération au niveau d'une extrémité inférieure d'une des parties de l'échangeur de régénération de façon à réaliser un échange d'ions à contre-courant entre l'eau de régénération ascendante et la phase fluorée récupérée descendante,
- récupération de la phase fluorée régénérée, et
- introduction de la phase fluorée régénérée au niveau d'une partie supérieure de l'échangeur de prétraitement.

L'invention a également pour objet un procédé de traitement de l'eau, comprenant un procédé de prétraitement tel que défini ci-dessus et comportant, en outre, une étape de traitement par dessalement postérieure à l'étape de récupération de l'eau prétraitée.

Optionnellement, l'eau de régénération comprend au moins en partie l'eau dessalée lors de l'étape de traitement.

L'invention sera mieux comprise à la lecture de la description qui va suivre, donnée uniquement à titre d'exemple et faite en se référant aux dessins dans lesquels :

- la figure 1 présente l'échangeur de chaleur à contact direct travaille à haute température,
- la figure 2 présente l'échangeur de chaleur à contact direct travaille à basse température,
- la figure 3 présente un mode de réalisation dans lequel l'échangeur à contact direct fonctionne à la fois en échange

de chaleur et en échange d'ions soit en l'espèce à haute température et avec une phase continue comportant un liquide fluoré hydrophobe et un tensioactif ionique à tête échangeuse d'ions,

- la figure 4 illustrant la présence de tensioactifs à têtes anioniques autour d'une goutte d'eau,
- la figure 5 illustrant la présence de tensioactifs à têtes cationiques autour d'une goutte d'eau, et
- la figure 6 schématisant l'échange de cations et d'anions entre la phase fluorée et l'eau à traiter,
- la figure 7 présente un quatrième mode de réalisation dans lequel l'échangeur à contact direct fonctionne à la fois en échange de chaleur et en échange d'ions soit en l'espèce à haute température et avec une phase continue comportant un liquide fluoré hydrophobe et des tensioactifs cationique et anionique à têtes échangeuses d'ions.

Exemple 1 : Liquides d'échange thermique.

**Tableau 1 :**

| LIQUIDE FLUORE HYDROPHOBE | | | | | | |
|---|---|---|---|---|---|---|
| Nom | Formule Semi-développée | Mw (g/mol) | Teb (°C) | Tfus (°C) | ρ 25°C (kg/m³) | Formule Brute |
| Eau (pour rappel) | HOH | 18 | 100 | 0 | 997 | $H_2O$ |
| **PERFLUOROCARBURES** | | | | | | |
| PFC - Perfluorooctane | $CF_3(CF_2)_6CF_3$ | 438 | 106 | -25 | 1765 | $C_8F_{18}$ |
| PFC - Perfluorononane | $CF_3(CF_2)_7CF_3$ | 488 | 118 | -16 | 1788 | $C_9F_{20}$ |
| **HYDROFLUOROCARBURES** | | | | | | |
| HFC-1,1,1H- Perfluorooctane | $CH_3(CF_2)_6CF_3$ | 384 | 109* | -76* | 1445* | $C_8H_3F_{15}$ |
| HFC - 1,1,1H-Perfluorononane | $CH_3(CF_2)_7CF_3$ | 434 | 121* | -66* | 1475* | $C_9H_3F_{17}$ |
| **PERFLUOROCYCLOHEXANES** | | | | | | |
| PFCH - Perfluoro-1,3-dimethylcyclohexane | $C_6F_{10}(CF_3)_2$ | 400 | 102 | -55 | 1828 | $C_8F_{16}$ |
| PFCH - Perfluoro-1,3,5-trimethylcyclohexane | $C_6F_9(CF_3)_3$ | 450 | 127 | -68 | 1888 | $C_9F_{18}$ |
| **HYDROFLUOROCYCLOHEXANES** | | | | | | |
| HFCH - 1,1,1H-Perfluoromethy lcyclohexane | $C_6F_{11}(CH_3)$ | 296 | 100* | -88* | 1540* | $C_7H_3F_{11}$ |
| FCH-1,1,1H-Perfluoro-1,2-dimethyleyclohexane | $C_6F_{10}(CF_3)(CH_3)$ | 346 | 127* | -63* | 1580* | $C_8H_3F_{13}$ |
| **PERFLUORDECALINS** | | | | | | |
| FD - Perfluorodecalin | $C_4F_8>(CF)_2<C_4F_8$ | 462 | 142 | -10 | 1930 | $C_{10}F_{18}$ |
| PFMD - Perfluoro(methyldecalin) | PFD-$(CF_3)$ | 512 | 160 | -70 | 1970 | $C_{11}F_{22}$ |
| **HYDROFLUORODECALINS** | | | | | | |
| HFMD - 1,1,1H-Perfluoro (methyldecalin) | PFD-$(CH_3)$ | 458 | 185* | -77 | 1690* | $C_{11}H_3F_{19}$ |
| **PERFLUORODIALKYLAMINE** | | | | | | |
| Perfluorobutylpentylamine | $(C_4F_9)(C_5F_{11})$ NF | 521 | 99* | -45* | 1725* | $C_9F_{21}N$ |
| Perfluorodipentylamine | $(C_5F_{11})_2NF$ | 571 | 115* | -35* | 1755* | $C_{10}F_{23}N$ |

(suite)

| | | | | | | |
|---|---|---|---|---|---|---|
| **HYDROFLUORODIALKYLAMINES** | | | | | | |
| Méthyl-1 perfluoropropylpentylamine | ($CH_3$-$C_3F_6$) ($C_5F_{11}$) NF | 467 | _113*_ | _-52*_ | _1575*_ | $C_9H_3F_{18}N$ |
| Méthyl-1 perfluorobutylpentylamine | ($CH_3$-$C_4F_8$)($C_5F_{11}$)NF | 517 | _128*_ | _-41*_ | _1600*_ | $C_{10}H_3F_{20}N$ |
| **PERFLUOROTRIALKYLAMINES** | | | | | | |
| Perfluoroethyldipropylamine | ($C_2F_s$) $(C_3F_7)_2$ N | 471 | 101 | -65 | 1760 | $C_8F_{19}N$ |
| PFTA- Perfluorotripropylamine | $(C_3F_7)_3N$ | 521 | 130 | -52 | 1820 | $C_9F_{21}N$ |
| **HYDROFLUOROTRIALKYLAMINES** | | | | | | |
| Méthyl-1 perfluoromethyldiethylamine | $(CH_3CF_2)(C_3F_7)_2N$ | 417 | _98*_ | _-64*_ | _1550*_ | $C_8H_3F_{16}N$ |
| Méthyl-1 perfluoroethyldipropylamine | $(CH_3C_2F_4)(C_3F_7)_2$ N | 467 | _113*_ | _-52*_ | _1575*_ | $C_9H_3F_{18}N$ |
| **PERFLUOROAZACYCLOHEXANES** | | | | | | |
| Perfluoro-N-methylpipéridine | cycle(-$C_5F_{10}$-N-)-($CF_3$) | 333 | _102*_ | _-50*_ | _1750*_ | $C_6F_{13}N$ |
| **PERFLUOROETHERS** | | | | | | |
| PFE - Perfluorodibutyl ether | $(C_4F_9)_2O$ | 454 | 102 | _-48*_ | _1860*_ | $C_8F_{18}O$ |
| PFE - Perfluorodipentyl ether | $(C_5F_{11})_2O$ | 554 | _129*_ | _-38*_ | _1925*_ | $C_{10}F_{22}O$ |
| **HYDROFLUOROETHERS** | | | | | | |
| HFE - Methyl-Perfluorohexyl ether | $C_6F_{13}$-O-$CH_3$ | 350 | 98 | -38 | 1660 | $C_7H_3F_{13}O$ |
| HFE - 2-trifluoro-methyl-3-ethoxydodecofluorohexane | $C_2H_5$-O-CF($C_3F_7$)CF$(CF_3)_2$ | 414 | 128 | -100 | 1614 | $C_9H_5F_{15}O$ |
| **PERFLUOROCYCLOETHERS** | | | | | | |
| PFCE-Perfluoro-2-butyltetrahydrofuran | $C_4F_9$-FC< (-$C_3F_6$-O-)cycle | 416 | 102 | -88 | 1770 | $C_{18}F_{16}O$ |
| **HYDROFLUOROCYCLOETHERS** | | | | | | |
| HFCE - 1H,1H,1H-Perfluoro-2-butyltetrahydrofuran | $CH_3$-$C_3F_6$-FC< (-$C_3F_6$-O-)cycle | 362 | _105*_ | _-92*_ | _1650*_ | $C_8H_3F_{13}O$ |
| **PERFLUOROPOLYETHERS** | | | | | | |
| PFPE - Perfluorotriglyme | $CF_3$-$(OC_2F_4)_3$-$OCF_3$ | 502 | 106 | _-80*_ | _1875*_ | $C_8F_{18}O_4$ |
| PFPE - HT110 | $CF_3$-(($OCFCF_2$)-$CF_3$)-$(OCF_2)_4$-$OCF_3$ | 584 | 110 | -110 | 1710 | $C_9F_{20}O_6$ |

(suite)

| | | | | | | |
|---|---|---|---|---|---|---|
| **HYDROFLUOROPOLYETHERS** | | | | | | |
| HFPE-1H,1H,1H-Perfluorotriglyme | $CF_3$-$(OC_2F_4)_3$-$OCH_3$ | 448 | *138** | *-80** | *1600** | $C_8H_3F_{15},O_4$ |
| HFPE - ZT130 | $HF_2C$-$(OC_2F_4)$-$(OCF_2)_4$-$OCF_2H$ | 498 | 130 | -114 | 1650 | $C_8H_2F_{16}O_6$ |
| **PERFLUOROSULFURES OU PERFLUOROTHIOETHERS** | | | | | | |
| PFE - Perfluorodipropyl thioether | $(C_3F_7)_2S$ | 370 | *100** | *-71** | *1850** | $C_6F_{14}S$ |
| PFE - Perfluorodibutyl thioether | $(C_4F_9)_2S$ | 470 | *135** | *-46** | *1900** | $C_8F_{18}S$ |
| **HYDROFLUOROSULFURES OU HYDROFLUOROTHIOETHERS** | | | | | | |
| 1-Methylsulfanyl-PerfluoroPentane | $C_5F_{11}$-S-$CH_3$ | 316 | *109** | *-82** | *1530** | $C_6H_3F_{11}S$ |
| 1-Methylsulfanyl-PerfluoroHexane | $C_6F_{13}$-S-$CH_3$ | 366 | *127** | *-69** | *1560** | $C_7H_3F_{13}S$ |
| **PERFLUOROCYCLOTHIOETHERS** | | | | | | |
| Perfluoro-2-methyl-1-thiacyclohexane | $CF_3$-FC< $(-C_4F_8-S-)_{cycle}$ | 332 | *104** | *-70** | *1700** | $C_6F_{12}S$ |
| **LIQUIDES IONIQUES** | | | | | | |
| 1-éthyl-3-methylimidazolium bis (trifluoromethylsulfonyl)imide | 1,3-$C_2H_5$-$CH_3$-$_{cycle}(C_3H_3N_2)^+$ $(CF_3SO_2)_2N^-$ | 391 | 417 Déc. | -16 | 1520 | $C_8H_{11}F_6N_3O_4S_2$ |
| 1-Butyl-1-methylpyrrolidinium bis (trifluoromethylsulfonyl)imide | 1,1-$C_4H_9$-$CH_3$-$_{cycle}(C_4H_8N)$ $(CF_3SO_2)_2N^-$ | 422 | > 350 | -50 | 1400 | $C_{11}H_{20}F_6N_2O_4S_2$ |
| 1-Butyl-3-methylpyridiniurn bis (trifluoromethylsulfonyl)imide | 1,3-$C_4H_9$-$CH_3$-$_{cycle}(C_5H_4N)^+$ $(CF_3\ SO_2)_2N^-$ | 430 | > 350 | 16 | 1400 | $C_{12}H_{16}F_6N_2O_4S_2$ |
| 1-éthyl-3-methylimidazolium bis (pentafluoroéthylsulfonyl)imide | 1,3-$C_2H_5$-$CH_3$-$_{cycle}(C_3H_3N_2)^+$ $(CF_3CF_2SO_2)_2N^-$ | 491 | > 350 | -1 | 1340 | $C_{10}H_{11}F_{10}N_3O_4S_2$ |
| ** Températures d'ébullitions, de fusion et densités estimées par une méthode d'analyse de groupes basée sur plus de 600 molécules à propriétés physiques connues ou partiellement connues.* | | | | | | |

Exemple 2 : Tensioactifs fluorés non ioniques.

**Tableau 2 :**

| TENSIOACTIFS FLUORES NON IONIQUES | | | | | | |
|---|---|---|---|---|---|---|
| Nom | Formule Semi-développée | Mw (g/mol) | Teb (°C) | HLB | ρ 25°C (kg/m³) | Formule Brute |
| **PERFLUOROALDEHYDE** | | | | | | |
| Perfluorooctanal | $C_7F_{15}$-HC=O | 398 | 108* | 1,1 | 1800* | $C_8HF_{15}O$ |
| Perfluorononanal | $C_8F_{17}$-HC=O | 448 | 125* | 0,2 | 1840* | $C_9HF_{17}O$ |
| **HYDROFLUOROALDEHYDE** | | | | | | |
| 2,2H-perfluoroheptanal | $C_5F_{11}CH_2$-HC=O | 312 | 109* | 2,4 | 1800* | $C_7H_3F_{11}O$ |
| 2,2H-perfluorooctanal | $C_6F_{13}$-$CH_2$-HC=O | 362 | 127* | 1,5 | 1825* | $C_8H_3F_{13}O$ |
| **HYDROFLUOROETHERALDEHYDE** | | | | | | |
| 2,2H-3-oxy-perfluorohexanal | $C_4F_9$-O-$CH_2$-HC=O | 278 | 111* | 4,5 | 1870* | $C_6H_3F_9O_2$ |
| 2,2H-3-oxy-perfluorooctanal | $C_6F_{13}$-O-$CH_2$-HC=O | 378 | 148* | 2,8 | 1925* | $C_8H_3F_{13}O_2$ |
| **HYDROFLUOROTHIOETHERALDEHYDE** | | | | | | |
| 2,2H-3-thio-perfluorohexanal | $C_4F_9$-S-$CH_2$-HC=O | 294 | 149* | 3,5 | 1900* | $C_6H_3F_9OS$ |
| **PERFLUOROALKYLAMINES** | | | | | | |
| PerfluoroHexylamine | $C_6F_{13}$-$NH_2$ | 335 | 104* | 1,0* | 1730* | $C_6H_2F_{13}N$ |
| PerfluoroHeptylamine | $C_7F_{15}$-$NH_2$ | 385 | 121* | 0,8* | 760* | $C_7H_2F_{15}N$ |
| **HYDROFLUOROALKYLAMINES** | | | | | | |
| 1,1H-PerfluoroHexylamine | $C_5F_{11}$-$CH_2$-$NH_2$ | 299 | 124* | 1,1* | 1550* | $C_6H_4F_{11}N$ |
| **PERFLUOROALKYLETHERAMINES** | | | | | | |
| PerfluoroHexyloxyamine | $C_6F_{13}$-O-$NH_2$ | 351 | 102* | 1,8* | 1830* | $C_6H_2F_{13}NO$ |
| **HYDROFLUOROEALKYLTHERAMINES** | | | | | | |
| 1,1H-PerfluoroButyloxymethylamine | $C_4F_9$-O-$CH_2$-$NH_2$ | 265 | 126* | 2,4* | 1620* | $C_5H_4F_9NO$ |
| **PERFLUOROALKYLTHIOETHERAMINES** | | | | | | |
| PerfluoroButylThioétheramine | $C_4F_9$-S-$NH_2$ | 267 | 110* | 3,6* | 1530* | $C_4H_2F_9NS$ |
| PerfluoroPentylThioétheramine | $C_5F_{11}$-S-$NH_2$ | 317 | 128* | 3,0* | 1560* | $C_5H_2F_{11}NS$ |
| **PERFLUOROALKYL ETHYLENE ALCOOL** | | | | | | |
| Perfluorobutyletheréthylène alcool | $C_4F_9O$-$CH_2CH_2$-OH | 280 | 176* | 5,8* | 1685* | $C_6H_5F_9O_2$ |
| Perfluoropentyletheréthylène alcool | $C_SF_{11}O$-$CH_2CH_2$-OH | 330 | 195* | 4,9* | 1700* | $C_7H_5F_{11}O_2$ |
| **PERFLUORODIALKYLETHERCOURONNES** | | | | | | |
| Perfluoro dibutane12-éthercouronne-4 | / | 864 | / | / | / | $C_6F_{32}O_4$ |

(suite)

| PERFLUORODIALKYLETHERCOURONNES | | | | | | |
|---|---|---|---|---|---|---|
| Perfluoro dipentane15-éthercouronne-5 | / | 1080 | / | / | / | $C_{20}F_{40}O_5$ |
| Perfluoro dihexanel8-éthercouronne-6 | / | 1296 | / | / | / | $C_{24}F_{48}O_6$ |
| Perfluoro diheptane21-éthercouronne-7 | / | 1512 | / | / | / | $C_{28}F_{56}O_7$ |
| **HYDROFLUORODIALKYLETHERCOURONNES** | | | | | | |
| hydrofluoro dihexane18-éthercouronne-6 | / | 1152 | | | | $C_{16}H_8F_{40}O_6$ |
| * Températures d'ébullition et densités estimées par une méthode d'analyse de groupes basée sur plus de 600 molécules à propriétés physiques connues ou partiellement connues. *HLB : balance hydrophile/lipophile.* | | | | | | |

Exemple 3 : Tensioactifs fluorés ioniques.

**Tableau 3 :**

| TENSIOACTIFS FLUORES IONIQUES | | | | | | |
|---|---|---|---|---|---|---|
| Nom | Formule Semi-développée | Mw (g/mol) | Teb (°C) | Tfus (°C) | ρ 25°C ($kg/m^3$) | Formule Brute |
| **PERFLUOROALCOOLS** | | | | | | |
| Perfluoropentanol-1 | $C_5F_{11}$-OH | 286 | 111* | -46* | 1765* | $C_5HF_{11}O$ |
| Perfluorohexanol-1 | $C_6F_{13}$-OH | 336 | 128* | -33* | 1800* | $C_6HF_{13}O$ |
| Perfluorononanol-1 | $C_9F_{19}$-OH | 486 | 174* | 0* | 1885* | $C_9HF_{19}O$ |
| **PERFLUORODIALCOOLS** | | | | | | |
| Perfluorohexane diol-1,2 | $C_4F_9$-CF<(-OH) (-$CF_2$-OH) | 334 | 182* | -67* | 1890* | $C_6H_2F_{12}O_2$ |
| Perfluorononane diol-1,2 | $C_7F_{15}$-CF<(-OH) (-$CF_2$-OH) | 484 | 233* | -31* | 1975* | $C_9H_2F_{18}O_2$ |
| Perfluoroundecane diol-1,2 | $C_9F_{19}$-CF<(-OH) (-$CF_2$-OH) | 584 | 264* | -11* | 2040* | $C_{11}H_2F_{22}O_2$ |
| **PERFLUOROALKOXYDES** | | | | | | |
| Sodium Perfluorooctanolate-1 | $C_8F_{17}$-$O^-Na^+$ | 458 | / | / | / | $C_8F_{17}ONa$ |
| **PERFLUORODIALKOXYDES** | | | | | | |
| Disodium Perfluorononanolate-1,2 | $C_7F_{15}$-CF<(-$O^-Na^+$)(-$CF_2$-$O^-$Na) | 506 | / | / | / | $C_9F_{18}O_2Na_2$ |
| **ACIDES PERFLUOROALKYLCARBOXYQUES** | | | | | | |
| Acide heptafluorobutanoïque | $C_3F_7$-COOH | 214 | 121 | -17,5 | 1650 | $C_4HF_7O_2$ |
| Acide perfluorohexanoïque | $C_5F_{11}$-COOH | 314 | 157 | 5,6 | 1840* | $C_6HF_{11}O_2$ |
| Acide perfluorooctanoïque | $C_7F_{15}$-COOH | 414 | 189 | 30* | 1895* | $C_5HF_{15}O_2$ |
| **PERFLUOROALKYLCARBOXYLATES** | | | | | | |
| Sodium Perfluorohexanoate | $C_5F_{11}$-$COO^-Na^+$ | 338 | / | / | / | $C_6F_{11}C_2Na$ |
| **ACIDES PERFLUORO ALKYL CARBOXIMIDIQUES** | | | | | | |
| Acide perfluorohexanoïmidique | $C_5F_{11}$-CNHOH | 313 | / | / | / | $C_6H_2F_{11}NO$ |

(suite)

| | | | | | | |
|---|---|---|---|---|---|---|
| **ACIDES PERFLUORO ALKYL CARBOXIMIDIQUES** | | | | | | |
| Acide perfluorooctanoïmidique | $C_7F_{15}$-CNHOH | 413 | / | / | / | $C_8H_2F_{15}NO$ |
| **PERFLUOROALKYLCARBOXIMIDATES** | | | | | | |
| Disodium Perfluorohexanomidate | $C_6F_{13}$-$CN^-Na^+$ $0^-Na^+$ | 407 | / | / | / | $C_7F_{13}NONa_2$ |
| **ACIDES PERFLUOROETHERALKYLCARBOXYQUES** | | | | | | |
| Acide perfluoro-2-oxa-hexanoïque | $C_4F_9$-O-COOH | 280 | *150** | *-15** | *1670** | $C_5HF_9O_3$ |
| Acide perfluoro-2-oxa-heptanoïque | $C_5F_{11}$-O-COOH | 330 | *170** | *-5** | *1690** | $C_6HF_{11}O_3$ |
| **ACIDES PERFLUOROALKYLSULFONIQUES** | | | | | | |
| Acide perfluoropentanesulfonique | $C_5F_{11}$-$SO_3H$ | 350 | / | / | / | $C_5HF_{11}O_3S$ |
| **PERFLUOROALKYLSULFONATES** | | | | | | |
| Sodium perfluoropentylsulfonate | $C_5F_{11}$-$SO_3^-Na^+$ | 372 | / | / | / | $C_5F_{11}O_3SNa$ |
| **ACIDES PERFLUOROALKYLSULFURIQUES** | | | | | | |
| Acide perfluoropentanesulfurique | $C_5F_{11}$-O-$SO_3H$ | 366 | / | / | / | $C_5HF_{11}O_4S$ |
| **PERFLUOROALKYLSULFATES** | | | | | | |
| Sodium perfluoropentylsulfate | $C_5F_{11}$-O-$SO_3^-Na^+$ | 388 | / | / | / | $C_5F_{11}O_4SNa$ |
| **ACIDES PERFLUOROALKYLETHER SULFONIQUES** | | | | | | |
| Acide perfluoro-5-oxa-nonanesulfonique | $C_4F_9$-O-$C_4F_8$-$SO_3H$ | 516 | / | / | / | $C_8HF_{17}O_4S$ |
| **PERFLUOROALKYLETHERSULFONATES** | | | | | | |
| Sodium perfluoro-5-oxa-nonanesulfonate | $C_4F_9$-O-$C_4F_8$-$SO_3^-$ $Na^+$ | 538 | / | / | / | $C_8F_{17}O_4SNa$ |
| **SELS D'HYDROFLUORODIALKYLAMMONIUM** | | | | | | |
| Chlorure de méthyle tri-(1H, 1H, 2H, 2H-perfluoroheptyl)ammonium | $CH_3$-$N^+Cl^-$<(-($(CH_2)_2$ $(CF_2)_5F))_3$ | 988 | / | <20 | / | $C_{22}H_{15}F_{33}NCl$ |
| Chlorure de méthyle tri-(1H, 1H, 2H, 2H, 3H, 3H-perfluoroheptyl) ammonium | $CH_3$-$N^+Cl^-$(-($(CH_2)_3(CF_2)_4$) $F)_3$ | 874 | / | < 20 | / | $C_{22}H_{21}F_{27}NCl$ |
| Chlorure de méthyle tri-(1H, 1H-perfluorohexyl)ammonium | $CH_3$-$N^+Cl^-$<(-($CH_2$ $(CF_2)_5F))_3$ | 946 | / | <20 | / | $C_{19}H_9F_{33}NCl$ |

(suite)

| | | | | | | |
|---|---|---|---|---|---|---|
| **SELS D'HYDROFLUORODIALKYLAMMONIUM** | | | | | | |
| Chlorure de méthyle tri-(1H, 1H, 2H, 2H-perfluorohexyl)ammonium | $CH_3$-$N^+Cl$<(-($(CH_2)_2$ $(CF_2)_4F))_3$ | 832 | / | <20 | / | $C_{19}H_{15}F_{27}NCl$ |
| Chlorure de méthyle triperfluoropentyl ammonium | $CH_3$-$N^+Cl^-$<(-($(CF_2)_5F))_3$ | 904 | / | <20 | / | $C_{16}H_3F_{33}NCl$ |
| Chlorure de méthyle tri-(1H, 1H-perfluoropentyl) ammonium | $CH_3$-$N^+Cl^-$<(-($CH_2$ $(CF_2)_4F))_3$ | 790 | / | <20 | / | $C_{16}H_9F_{27}NCl$ |
| **SELS D'HYDROFLUOROALKYLIMIDAZOLIUM** | | | | | | |
| Chlorure de 1-méthyl-3-perfluorohexvl-imidazolium | $F(CF_2)_6$-$_{cycle}(C_3H_3N_2)^+Cl^-$ -$CH_3$ | 449 | / | <-25 | / | $C_{10}H_6F_{13}N_2Cl$ |
| Chlorure de perfluoro-1-méthyl-3-(1H, 1H-perfluorohexyl)imidazolium | $F(CF_2)_5(CH_2)$-$_{cycle}$ $(C_3H_3N_2)^+Cl^-$-$CH_3$ | 411 | / | <-25 | / | $C_{10}H_8F_{11}N_2Cl$ |
| Chlorure de 1-méthyl-3-(1H, 1H-perfluoroheptyl)imidazolium | $F(CF_2)_6(CH_2)$-$_{cycle}$ $(C_3H_3N_2)^+Cl^-$-$CH_3$ | 463 | / | <-25 | / | $C_{11}H_8F_{13}N_2Cl$ |
| Chlorure de 1-méthyl-3-(1H, 1H, 2H, 2H - perfluoroheptvl)imidazolium | $F(CF_2)_5(CH_2)_2$-cycle $(C_3H_3N_2)^+Cl^-$-$CH_3$ | 425 | / | <-25 | / | $C_{11}H_{10}F_{11}N_2Cl$ |
| Chlorure de 1-méthyl-3-(1H, 1H, 2H, 2H - perfluoroctvl)imidazolium | $F(CF_2)_6(CH_2)_2$-$_{cycle}$ $(C_3H_3N_2)^+Cl^-$-$CH_3$ | 477 | / | <-25 | / | $C_{12}H_{10}F_{13}N_2Cl$ |
| Chlorure de 1-méthyl-3-(1H, 1H, 2H, 2H, 3H, 3H - perfluoroctyl) imidazolium | $F(CF_2)_5(CH_2)_3$-cycle $(C_3H_3N_2)^+Cl^-$-$CH_3$ | 439 | / | <-25 | / | $C_{12}H_{12}F_{11}N_2Cl$ |
| Chlorure de 1-méthyl-3-[2-(2-perfluorométhoxyéthoxy)-perfluoroéthyl] imidazolium | $CF_3(CF_2CF_2)_2$-$_{cycle}$ $(C_3H_3N_2)^+Cl^-$-$CH_3$ | 429 | / | <-25 | / | $C_9H_6O_2F_{11}N_2Cl$ |
| **SELS D'HYDROFLUOROALKYLBORATE** | | | | | | |
| Méthyle tri-(1H, 1H, 2H, 2H-perfluoroheptyl)borate de sodium | $CH_3$-$BNa^+$<(-($(CH_2)_2$ $(CF_2)_5F))_3$ | 973 | / | <20 | / | $C_{22}H_{15}F_{33}BNa$ |
| Méthyle tri-(1H, 1H, 2H, 2H, 3H, 3H-perfluoroheptyl)borate de sodium | $CH_3$-$B^-Na^+$<(-($(CH_2)_3$ $(CF_2)_4F))_3$ | 859 | / | <20 | / | $C_{22}H_{21}F_{27}BNa$ |
| Méthyle tri-(1H, 1H-perfluorohexyl)borate de sodium | $CH_3$-B-$Na^+$<(-($CH_2$ $(CF_2)_5F))_3$ | 931 | / | <20 | / | $C_{19}H_9F_{33}BNa$ |
| Méthyle tri-(1H, 1H, 2H, 2H-perfluorohexyl)borate de sodium | $CH_3$-$B^-Na^+$<(-($(CH_2)_2$ $(CF_2)_4F))_3$ | 817 | / | <20 | / | $C_{19}H_{15}F_{27}BNa$ |

(suite)

| | | | | | | |
|---|---|---|---|---|---|---|
| **SELS D'HYDROFLUOROALKYLBORATE** | | | | | | |
| Méthyle triperfluoropentylborate de sodium | $CH_3$-$B^-Na^+$<-$((CF_2)_5F))_3$ | 889 | / | <20 | / | $C_{16}H_3F_{33}BNa$ |
| Méthyle tri-(1H, 1H-perfluoropentvl)borate de sodium | $CH_3$-B-$Na^+$<-$(CH_2(CF_2)_4F))_3$ | 775 | / | <20 | / | $C_{16}H_9F_{27}BNa$ |
| **SELS D'HYDROFLUORODIALKYLCYCLOPENTADIENE DIBORATE** | | | | | | |
| 1-méthyle-3-perfluorohexyl-1,3-dibora-2,4-cyclopentadiène de sodium | $F(CF_2)_6$-cycle$(C_3H_3B_2)^-Ne^+$-$CH_3$ | 418 | / | <-25 | / | $C_{10}H_6F_{13}B_2Na$ |
| 1-méthyle-3-(1H, 1H-perfluorohexyl)-1, 3-dibora-2,4-cyclopentadiène de sodium | $F(CF_2)_5(CH_2)$-$_{cycle}$ $(C_3H_3B_2)^-Na^+$-$CH_3$ | 382 | / | <-25 | / | $C_{10}H_8F_{11}B_2Na$ |
| 1-méthyle-3-(1H, 1H-perfluoroheptyl)-1, 3-dibora-2,4-cvclopentadiéne de sodium | $F(CF_2)_6(CH_2)$-$_{cycle}$ $(C_3H_3B_2)$-$Na^+$-$CH_3$ | 432 | / | <-25 | / | $C_{11}H_8F_{13}B_2Na$ |
| 1-méthyle-3-(1H, 1H, 2H, 2H-perfluoroheptyl)-1,3-dibora-2,4-cyclopentadiene de sodium | $F(CF_2)_5(H_2)_2$-$_{cycle}$ $(C_3H_3B_2)^-Na^+$-$CH_3$ | 394 | / | <-25 | / | $C_{11}H_{10}F_{11}B_2Na$ |
| 1-méthyle-3-(1H, 1H, 2H, 2H-perfluoroctyl)-1, 3-dibora-2,4-cyclopentadiéne de sodium | $F(CF_2)_6(CH_2)_2$-$_{cycle}$ $(C_3H_3B_2)^-Na^+$-$CH_3$ | 446 | / | <-25 | / | $C_{12}H_{10}F_{13}B_2Na$ |
| 1-méthyle-3-(1H, 1H, 2H, 2H, 3H, 3H-perfluoroctyl)-1, 3-dibora-2,4-cyclopentadiène de sodium | $F(CF_2)_5(CH_2)_3$-$_{cycle}$ $(C_3H_3B_2)^-Na^+$-$CH_3$ | 396 | / | <-25 | / | $C_{11}H_{12}F_{11}B_2Na$ |
| 1-méthyle-3-[2-(2-perfluorométhoxyéthoxy)-perfluoroéthyl]-1, 3-dibora-2,4-cyclopentadiène de sodium | $CF_3(CF_2CF_2O)_2$-$_{cycle}$ $(C_3H_3B_2)^-Na^+$-$CH_3$ | 398 | / | <-25 | / | $C_9H_6O_2F_{11}B_2Na$ |
| **.Températures d'ébullitions, de fusion et densités estimées par une méthode d'analyse de groupes basée sur plus de 600 molécules à propriétés physiques connues ou partiellement connues.* | | | | | | |

D'autres tensioactifs fluorés ioniques décrits ci-dessous peuvent également être utilisés avec chaque groupe R1, R2, R3, R4 choisi indépendamment parmi les groupes suivants: $-((CH_2)_2(CF_2)_5F)$, $-((CH_2)_3(CF_2)_4F)$, $-((CH_2)(CF_2)_5F)$, $-((CH_2)_2(CF_2)_4F)$, $-((CF_2)_5F)$,$-((CH_2(CF_2)_4F)$, $-((CF_2)_6F)$, $-((CF_2)_4F)$, $-((CH_2)(CF_2)_6F)$, $-((CH_2)_2(CF_2)_6F)$, $-((CH_2)_3(CF_2)_5F)$,$-((CH_2)_3(CF_2)_6F)$, $-((CF_2CF_2O)_2CF_3)$ et $-CH_3$.

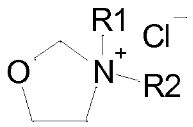
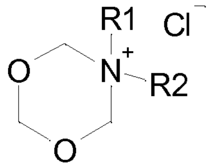
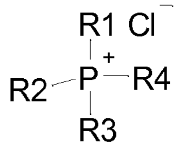

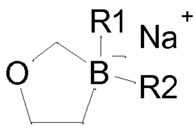
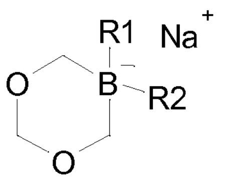
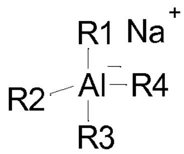

Exemple comparatif 4 : Echangeur de chaleur à contact direct travaillant à haute température.

Sur la figure 1 est représenté un premier mode de réalisation selon l'invention dans lequel l'échangeur de chaleur à contact direct 1 fonctionne à haute température. L'eau à traiter 2, ici de l'eau de mer, est comprimée par une pompe liquide 3 pour que l'eau 2 ait une pression supérieure à la pression barométrique d'une colonne 4 au niveau d'un distributeur inférieur 5, assurant la dispersion de l'eau 2 en gouttes d'eau de taille homogène sur toute une zone basse 6 de la colonne 4. Ainsi, un échange de chaleur à contact direct s'effectue dans la zone 6 à contre-courant entre l'eau 2 dispersée montante qui se réchauffe et une phase fluorée continue 7 descendante qui se refroidit.

Arrivée au niveau d'une partie supérieure 8 de la zone basse 6, l'eau 2 moins dense que le liquide fluoré hydrophobe d'échange thermique 7 et non miscible s'en sépare naturellement tandis que les gaz 9 initialement dissous dans l'eau 2 sont purgés. L'eau chaude 2 est à une pression suffisamment élevée pour qu'il n'y ait pas d'ébullition.

Elle est alors envoyée à une unité de cristallisation 10 permettant la cristallisation éventuelle des sels à solubilité inverse et leur évacuation sous forme solide. Le fond de cette unité de cristallisation 10 comprend un liquide fluoré d'échange thermique 7 sur lequel viennent se poser les cristaux de sels permettant une évacuation plus aisée des solides précipités.

A cette unité de cristallisation 10 est associée une section de clarification 11 permettant une production d'eau salée limpide 2 renvoyée vers un second distributeur 12 assurant une dispersion homogène de l'eau salée clarifiée 2 sur toute une zone haute 13 de la colonne 4. Un échange thermique est alors réalisé entre la phase dispersée montante d'eau salée 2 qui se refroidit et la phase fluorée continue 7 descendante qui se réchauffe. Ainsi, en tête de colonne 14, une eau salée froide et clarifiée 2 est produite pour alimenter une unité de dessalement 15 à fort taux de conversion d'eau.

L'échangeur de chaleur à contact direct 1 est également muni d'un système 16 de circulation en cycle fermé du liquide d'échange thermique 7 qui est collecté froid et sous pression maximale en bas de la zone basse 6 pour être recyclé en haut de la zone haute 13 et distribué sur toute la section de la colonne 4. Descendant en phase continue dans cette colonne 4, ce liquide fluoré d'échange thermique 7 réchauffé atteint un collecteur 17 situé à l'interface de la zone basse 6 et de la zone haute 13, ledit collecteur 17 assurant l'apport thermique de la colonne 4 et la distribution de la phase fluorée continue sur toute la section de la zone basse 6.

A titre d'exemple d'application, on considère un échangeur à contact direct, tel que décrit ci-avant traitant 10 000 $m^3$/jour d'eau de mer à 36 g/litre de sel, permettant de passer de 25 à 123°C par contact direct avec un liquide de phase fluorée continue (liquide d'échange thermique, LET) de type perfluorononane ($C_9F_{20}$ - $T_{eb}$=123°C, $T_{fus}$=-16°C). Une synthèse des résultats obtenus est donnée dans les deux tableaux suivants pour la zone basse 6 de préchauffage et la zone haute 13 de refroidissement respectivement :

| | | |
|---|---|---|
| Hauteur de zone basse (HTT) | m | 2,25 |
| Diamètre de colonne moyen | m | 2,44 |
| Diamètre gouttes d'eau | mm | 2 |
| Tentrée / Tsortie eau de mer | °C | 25 / 123 |
| Pentrée / Psortie eau de mer | Bar abs | 2,52 / 2,19 |
| ΔT bas / ΔT haut échangeur | °C | 1,0 / 1,04 |
| ΔT moyen colonne | °C | 2,49 |

| | | |
|---|---|---|
| Taux de rétention | / | 17,9% |
| Vitesse relative moyenne | cm/sec | 17,1 |
| Aire interfaciale | $m^2/m^3$ | 533 |
| Coeff. Surf. d'échange thermique moyen | $kW/m^2/°C$ | 3,33 |
| Coeff. Vol. d'échange thermique moyen | $kW/m^3/°C$ | 1774 |
| Débit massique relatif de LET | / | 3,217 |

| | | |
|---|---|---|
| Hauteur de zone haute (HTT) | m | 3,2 |
| Diamètre de colonne moyen | m | 2,46 |
| Diamètre gouttes d'eau | mm | 2 |
| Tentrée / Tsortie eau de mer clarifiée | °C | 120 / 30 |
| Pentrée / Psortie eau de mer clarifiée | Bar abs | 2 / 1,5 |
| ΔT bas / ΔT haut échangeur | °C | 2,9 / 3,9 |
| ΔT moyen colonne | °C | 1,61 |
| Taux de rétention | / | 18% |
| Vitesse relative moyenne | cm/sec | 22,1 |
| Aire interfaciale | $m^2/m^3$ | 545 |
| Coeff. Surf. d'échange thermique moyen | $kW/m^2/°C$ | 3,36 |
| Coeff. Vol. d'échange thermique moyen | $kW/m^3/°C$ | 1830 |
| Débit massique relatif de LET | / | 3,217 |

*« HTT » (hauteur tangentielle totale) est la hauteur des zones d'échange par contact direct 6 et 13 respectivement sur la figure 1.*

Dans cet exemple, une consommation d'énergie thermique de 7,3 $kWh/m^3$ d'eau salée est nécessaire pour prétraiter cette eau. Notons également que 2 à 5 tonnes par jour de sels à solubilité inverse doivent être évacuées ou réutilisées au moins partiellement pour potabiliser et reminéraliser l'eau dessalée.

D'un point de vue général, augmenter le taux de conversion d'une unité de dessalement a un impact direct sur les coûts de dessalement du fait d'une réduction des débits à traiter et du débit d'eau de saumure produite. Ainsi, augmenter le taux de conversion de l'eau de 50 à 80% permet de réduire le débit d'eau à traiter de 35% et de réduire le débit de saumure à gérer de 75% ce qui permet de réduire le coût unitaire du mètre cube d'eau douce produit de

l'ordre de 15 à 35% en combinant l'unité décrite ci-dessus avec les technologies de dessalement actuelles.

Exemple comparatif 5 : Echangeur de chaleur à contact direct travaillant à basse température

Sur la figure 2 est représenté un second mode de réalisation selon l'invention dans lequel l'échangeur de chaleur à contact direct 1 fonctionne à basse température. L'eau à traiter 2, ici de l'eau de mer, est comprimée par une pompe liquide 3 pour que l'eau 2 ait une pression supérieure à la pression barométrique d'une colonne 4 au niveau d'un distributeur inférieur 5, assurant la dispersion de l'eau 2 en gouttes d'eau de taille homogène sur toute la zone basse 6 de la colonne 4. Ainsi, un échange de chaleur à contact direct s'effectue dans la zone 6 à contre-courant entre l'eau 2 dispersée montante qui se refroidit et la phase fluorée continue 7 descendante qui se réchauffe.

Arrivée au niveau d'une partie supérieure 8 de la zone basse 6, l'eau 2 moins dense que le liquide fluoré d'échange thermique 7 et non miscible s'en sépare naturellement.

L'eau froide 2 est alors envoyée à une unité de dessalement 15 par gel de l'eau où il y a cristallisation et séparation de l'eau à traiter sous forme d'eau douce et de saumure liquide.

La saumure ou les cristaux de glace fondus issus de 2 sont alors renvoyées vers un second distributeur 12 assurant une dispersion homogène de ceux-ci sur toute la zone haute 13 de la colonne 4. Un échange thermique est alors réalisé entre la phase dispersée montante d'eau douce ou de saumure issus de 2 qui se réchauffe et la phase fluorée continue 7 descendante qui se refroidit.

Ainsi, en tête de colonne 14, on récupère au choix une eau douce ou une saumure à température ambiante.

L'échangeur de chaleur à contact direct 1 est également muni d'un système 16 de circulation en cycle fermé du liquide fluoré d'échange thermique 7 qui est collecté à température ambiante et sous pression maximale en bas de la zone basse 6 pour être recyclé en haut de la zone haute 13 et distribué sur toute la section de la colonne 4. Descendant en phase continue dans cette colonne 4, ce liquide fluoré d'échange thermique 7 refroidi atteint un collecteur 17 situé à l'interface de la zone basse 6 et de la zone haute 13, ledit collecteur 17 assurant pour partie le refroidissement thermique de la colonne 4 et assurant la distribution de la phase fluorée continue sur toute la section de la colonne basse 6.

Exemple 6 : Echangeur de chaleur à contact direct travaillant à haute température avec une phase fluorée continue comportant un liquide fluoré hydrophobe et un tensioactif ionique à tête échangeuse d'ions.

La figure 3 illustre un troisième mode de réalisation d'une unité et d'un procédé selon l'invention dans lequel l'échangeur de chaleur et d'ions à contact direct 1 fonctionne à haute température avec une phase fluorée continue comportant un liquide fluoré hydrophobe et un tensioactif ionique à tête échangeuse d'ions.

Le fonctionnement de l'échangeur de chaleur et d'ions est identique à celui décrit dans l'exemple 4 à deux différences près :

- La phase fluorée continue d'échange thermique 7 comporte un mélange de perfluorononane avec 2% de tensioactif fluoré ionique de type hydrofluoroalkylcarboxylate de sodium, et,
- le dispositif de recyclage est non seulement muni d'un système 16 de circulation en cycle fermé mais également d'une colonne de régénération 20 du tensioactif via l'emploi à contre courant d'au moins une partie de la saumure 19 issue du système de dessalement 15.

Ainsi, une fois la réaction d'échange d'ions réalisée au niveau de la colonne 4, la phase fluorée continue comportant le liquide fluoré à tête échangeuse d'ions est évacuée vers la colonne de régénération 20 à contact direct employant la saumure riche en NaCl issue de l'unité de dessalement 15 pour que soit réalisée une réaction inverse d'échange d'ions. La phase fluorée continue régénérée est ensuite envoyée en haut de la zone haute 13 et distribuée sur toute la section de la colonne 4.

Ce troisième mode de réalisation permet la mise en oeuvre d'une extraction en continue des cations multivalents par échange cationique entre phases liquide - liquide ce qui permet un adoucissement efficace de l'eau saline tout en minimisant la production de sels cristallisés à évacuer. De plus, en travaillant à une température supérieure à 80°C, la cinétique des échanges ioniques s'en trouve améliorée tout en permettant un dégazage des gaz dissous et une destruction thermique des bio-organismes.

A titre d'exemple, dans le tableau ci-dessous est donnée la composition d'une eau de mer standard, avant et après prétraitement de l'eau, par le système décrit en figure 3.

| **Eau de mer** | | **Brute** | **Prétraitée** |
|---|---|---|---|
| Cations | | mg/L | mg/L |
| | $Na^+$ | 11056 | 13829 |
| | $K^+$ | 418 | 418 |

(suite)

| Eau de mer | | Brute | Prétraitée |
|---|---|---|---|
| Cations | | mg/L | mg/L |
| | $Ca^{2+}$ | 418 | 0 |
| | $Sr^{2+}$ | 14 | 0 |
| | $Mg^{2+}$ | 1328 | 66 |
| Anions | | | |
| | $HCO3^{-}$ | 148 | 15 |
| | $SO4^{2-}$ | 2765 | 2765 |
| | $Cl^{-}$ | 19811 | 19811 |
| | $Br^{-}$ | 68 | 68 |
| | $B(OH)_3^{-}$ | 25 | 25 |
| Salinité | | 36065 | 37012 |
| Gaz | 25°C | mg/kg | mg/kg |
| | $O_2$ | 6,8 | 0 |
| | $CO_2$ | 45 | 5 |
| | $N_2$ | 11,1 | 0 |

Ce système permet de mettre en oeuvre en aval un système de dessalement à taux de conversion de l'eau très supérieur à 50% pour une réduction globale du coût du dessalement.

Exemple 7 : Echangeur de chaleur à contact direct travaillant à haute température avec une phase fluorée continue comportant un liquide fluoré hydrophobe et un couple de tensioactifs ioniques à têtes échangeuse d'ions pour le dessalement de l'eau.

La figure 7 illustre un mode de réalisation de l'unité et du procédé selon l'invention dans lequel l'échangeur 1 de prétraitement à contact direct de chaleur et ionique fonctionne à haute température avec une phase fluorée continue comportant un liquide fluoré hydrophobe, ici un hydrofluorocarbure, et un couple de tensioactifs cationiques et anioniques, ici des sels d'hydrofluoroalkylammonium et d'hydrofluoroalkylborate.

Le fonctionnement de l'échangeur de chaleur et ionique de l'exemple 7 est identique à celui décrit dans l'exemple 6. L'unité et le procédé de l'exemple 7 comportent les caractéristiques additionnelles suivantes.

La phase fluorée continue chargée en ions 21 est récupérée en pied de colonne au niveau de l'extrémité inférieure 5 de l'échangeur 1. L'eau traitée 30 est récupérée au niveau de l'extrémité supérieure 14 de l'échangeur 1. Une unité de dessalement 15 met en oeuvre une étape de traitement de l'eau 2 par dessalement postérieure à l'étape de récupération de l'eau traitée 30.

La phase continue fluorée récupérée 21 de l'échangeur 1 est introduite au niveau d'une extrémité supérieure 22 de l'échangeur 20 de régénération. Une eau de régénération est introduite au niveau d'une extrémité inférieure 24 sous pression sous forme de gouttes d'eau de façon à réaliser un échange d'ions, voire de chaleur, à contre-courant entre les gouttes d'eau ascendantes de l'eau de régénération et la phase fluorée continue récupérée 21 descendante. L'eau de régénération comprend une partie 19A de la saumure 19 et/ou de l'eau dessalée 23 issue(s) de l'unité de dessalement 15 qui est alimenté par l'eau traitée récupérée 30 au niveau de l'extrémité supérieure 14 de l'échangeur 1. Une partie 19B de la saumure 19 forme une partie de l'eau 2 à traiter qui est introduite au niveau de l'extrémité inférieure 5 de l'échangeur 1. La partie 19B est envoyée vers l'extrémité inférieure 5 au moyen d'une pompe 27.

Les ions de la phase fluorée continue récupérée 21 sont échangés depuis la phase fluorée continue récupérée 21 vers l'eau de régénération 19, 23. La phase fluorée continue régénérée 18 déchargée en ions est collectée au niveau de l'extrémité inférieure 24 et introduite au niveau de l'extrémité supérieure 14 de l'échangeur de prétraitement au moyen d'une pompe 25. Elle constitue alors la phase continue fluorée 7 descendante de l'échangeur 1. L'eau de régénération chargée en ions 26 est récupérée au niveau de l'extrémité supérieure 22 de l'échangeur de régénération 20.

A titre d'exemple, dans le tableau ci-dessous est donnée la composition d'une eau de mer standard, avant (eau 2) et après (eau 30) prétraitement de l'eau, par le système décrit en figure 7.

| Eau de mer | | Brute | Prétraitée |
|---|---|---|---|
| Cations | | mg/L | mg/L |
| | $Na^+$ | 11056 | 1658 |
| | $K^+$ | 418 | 12 |
| | $Ca^{2+}$ | 418 | 0 |
| | $Sr^{2+}$ | 14 | 0 |
| | $Mg^{2+}$ | 1328 | 0 |
| Anions | | | |
| | $HCO3^-$ | 148 | 0 |
| | $SO4^{2-}$ | 2765 | 2765 |
| | $Cl^-$ | 19811 | 2571 |
| | $Br^-$ | 68 | 0 |
| | $B(OH)_3^-$ | 25 | 0 |
| Salinité | | 36065 | 4242 |
| Gaz | 25°C | mg/kg | mg/kg |
| | $O_2$ | 6,8 | 0 |
| | $CO_2$ | 45 | 5 |
| | $N_2$ | 11,1 | 0 |

## Revendications

**1.** Procédé de prétraitement d'eau saline mettant en oeuvre une unité de prétraitement comprenant un échangeur d'ions à contact direct présentant une phase fluorée continue ou dispersée qui comporte un liquide fluoré non miscible à l'eau, de densité supérieure à 1,25, et un liquide fluoré d'échange ionique, ledit procédé comprenant les étapes suivantes :

- introduction de la phase fluorée au niveau d'une extrémité supérieure d'une des parties de l'échangeur (1) et introduction de l'eau (2), au niveau d'une extrémité inférieure (5) d'une des parties de l'échangeur (1) de façon à réaliser un échange d'ions à contre-courant entre l'eau ascendante (2) et la phase fluorée descendante (7), et,
- récupération de l'eau prétraitée (30) ;

ledit liquide fluoré d'échange ionique comprenant un composé fluoré ionique choisi dans le groupe constitué par :

les sels de carboxylate perfluoré, les sels de carboxylate hydrofluoré, les sels d'alkoxydes perfluorés, les sels d'alkoxydes hydrofluorés, les sels de dialkoxydes perfluorés, les sels de dialkoxydes hydrofluorés, les sels de carboximidates perfluorés, les sels de carboximidates hydrofluorés, les sels de sulfonate perfluorés, les sels de sulfonate hydrofluorés, les sels de sulfate perfluorés, les sels de sulfate hydrofluorés, les sels d'éthersulfonate perfluorés, les sels d'éther sulfonate hydrofluorés, les sels d'alkylammoniums perfluorés, les sels d'alkylammoniums hydrofluorés, les sels de dialkylimidazoliums perfluorés, les sels de dialkylimidazoliums hydrofluorés, les sels d'alkylphosphoniums perfluorés, les sels d'alkylphosphoniums hydrofluorés, les sels de dialkyloxazolidinium perfluorés (perfluorodialkyloxazolidinium), les sels de dialkyloxazolidinium hydrofluorés, les sels de dialkyl-1-aza-3,5-dioxacyclohexane perfluorés, les sels de dialkyl-1-aza-3,5-dioxacyclohexane hydrofluorés, les sels d'alkylborates perfluorés, les sels d'alkylborates hydrofluorés, les sels de dialkyldiboracyclopentadiènes perfluorés, les sels de dialkyldiboracyclopentadiènes hydrofluorés, les sels de dialkyloxaboralidinium perfluorés, les sels de dialkyloxaboralidinium hydrofluorés, les sels de dialkyl-1-bora-3,5-dioxacyclohexane perfluorés (perfluorodialkyl-1-bora-3,5-dioxacyclohexane), les sels de dialkyl-1-bora-3,5-dioxacyclohexane hydrofluorés, les sels de formule :

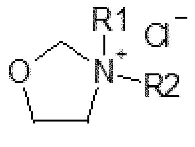
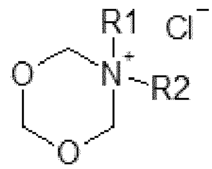
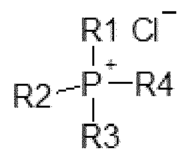

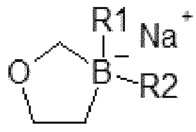
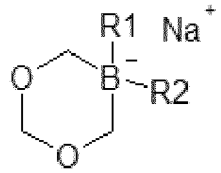
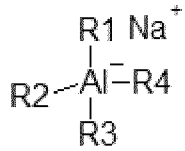

où RI, R2, R3, and R4, choisi indépendamment parmi les groupes suivants:-((CH2)2(CF2)5F), -((CH2)3(CF2)4F), -((CH2)(CF2)5F), -((CH2)2(CF2)4F), -((CF2)5F),-((CH2(CF2)4F), -((CF2)6F), -((CF2)4F), -((CH2)(CF2)6F), -((CH2)2(CF2)F),-((CH2)3(CF2)5F), -((CH2)3(CF2)6F), -((CF2CF20)2CF3) et -CH3 ; et leurs mélanges ;
ledit liquide fluoré non miscible à l'eau étant constitué par un composé de formule brute $C_nH_mF_pN_qO_xS_y$, dans laquelle :

- C, H, F, N, O, S représentent respectivement un atome de carbone, d'hydrogène, de fluor, d'azote, d'oxygène et de soufre,

  - n est un nombre entier compris entre 3 et 25, de préférence entre 3 et 12, bornes incluses,
  - m est un nombre entier compris entre 1 et 27, de préférence entre 1 et 20, bornes incluses,
  - p est un nombre entier compris entre 5 et 54, de préférence entre 5 et 27, bornes incluses,
  - q est un nombre entier compris entre 0 et 6, de préférence entre 0 et 3, bornes incluses,
  - x est un nombre entier compris entre 0 et 10, de préférence entre 0 et 7, bornes incluses, et
  - y est un nombre entier compris entre 0 et 6, de préférence entre 0 et 3, bornes incluses.

**2.** Procédé selon la revendication 1, dans lequel le liquide fluoré d'échange ionique comprend un liquide échangeur fluoré cationique et/ou un liquide échangeur fluoré anionique ; de préférence, le liquide échangeur fluoré anionique comprend une tête polaire cationique comprenant un hétéroatome d'azote et/ou de phosphore et/ou d'oxygène et/ou de souffre et/ou le liquide échangeur fluoré cationique comprend une tête polaire anionique comprenant un hétéroatome de bore et/ou d'aluminium et/ou d'oxygène et/ou de souffre.

**3.** Procédé selon la revendication 1 ou 2, dans lequel ledit composé fluoré d'échange ionique comprend au moins un composé sélectionné dans le groupe constitué par les sels hydrofluoroalkylammonium, hydrofluorodialkylimidazolium hydrofluoroalkylborate, hydrofluorodialkylcyclopentadiène diborate, hydrofluorocarboxylate, hydrofluorosulfonate, et hydrofluoroaluminium ainsi que des hydrofluorophosphonium ayant la formule suivante:

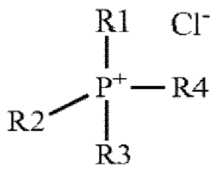
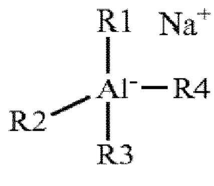

où RI, R2, R3, and R4, choisi indépendamment parmi les groupes suivant:-((CH2)2(CF2)5F), -((CH2)3(CF2)4F), -((CH2)(CF2)5F), -((CH2)2(CF2)4F), -((CF2)5F),-((CH2(CF2)4F), -((CF2)6F), -((CF2)4F), -((CH2)(CF2)6F), -((CH2)2(CF2)F),-((CH2)3(CF2)5F), -((CH2)3(CF2)6F), -((CF2CF20)2CF3) et -CH3.

**4.** Procédé selon l'une quelconque des revendications 1 à 3, dans lequel ledit composé fluoré d'échange ionique comprend au moins un composé choisi parmi les composés suivants : 1-éthyl-3-méthylimidazolium bis(trifluorométhyl sulfonyl)imide,1-Butyl-1-methylpyrrolidinium bis(trifluorométhyl sulfonyl)imide, 1-Butyl-3-methylpyridinium bis(trifluorométhyl sulfonyl)imide et 1-éthyl-3-méthylimidazolium bis(pentafluoroéthyl sulfonyl)imide.

**5.** Procédé selon l'une quelconque des revendications 1 à 4, comprenant, en outre, une étape d'introduction de la phase fluorée sous forme continue et dans lequel l'introduction de l'eau (2) est faite sous forme dispersée.

**6.** Procédé selon l'une quelconque des revendications 1 à 5, comprenant, en outre, une étape d'introduction de la phase fluorée sous forme dispersée et dans lequel l'introduction de l'eau (2) est faite sous forme continue.

**7.** Procédé selon l'une quelconque des revendications 1 à 6, comportant, en outre, les étapes suivantes:

- récupération de la phase fluorée (21) obtenue au niveau de l'extrémité inférieure (5) d'un premier échangeur (1), dit de prétraitement,
- introduction de la phase fluorée récupérée (21) au niveau d'une extrémité supérieure (22) d'une des parties d'un second échangeur (20), dit de régénération, de l'unité de prétraitement,
- introduction d'une eau de régénération (19A, 23) au niveau d'une extrémité inférieure (24) d'une des parties de l'échangeur de régénération (20) de façon à réaliser un échange d'ions à contre-courant entre l'eau de régénération ascendante (19A, 23) et la phase fluorée récupérée descendante (21),
- récupération de la phase fluorée régénérée (18), et
- introduction de la phase fluorée régénérée (18) au niveau d'une partie supérieure (14) de l'échangeur de prétraitement (1).

**8.** Procédé de traitement de l'eau, comprenant le procédé de prétraitement selon l'une quelconque des revendications 1 à 7 et comportant, en outre, une étape de traitement par dessalement postérieure à l'étape de récupération de l'eau prétraitée (30).

**9.** Procédé selon la revendication précédente, dans lequel l'eau de régénération (19A, 23) comprend au moins en partie l'eau dessalée (23) lors de l'étape de traitement (19A, 23).

**10.** Unité de prétraitement d'eau saline, comprenant un échangeur d'ions à contact direct tel que décrit à l'une quelconque des revendications 1 à 9, ledit échangeur (1) comprenant une colonne et une phase fluorée, ladite phase fluorée étant telle que décrite aux revendications 1 à 9.

**11.** Utilisation d'un échangeur à contact direct comportant une phase fluorée continue ou dispersée qui comporte un liquide fluoré non miscible à l'eau, de densité supérieure à 1,25, et un liquide fluoré d'échange ionique ledit liquide fluoré d'échange ionique comprenant un composé fluoré ionique choisi dans le groupe constitué par :

les sels de carboxylate perfluoré, les sels de carboxylate hydrofluoré, les sels d'alkoxydes perfluorés, les sels d'alkoxydes hydrofluorés, les sels de dialkoxydes perfluorés, les sels de dialkoxydes hydrofluorés, les sels de carboximidates perfluorés, les sels de carboximidates hydrofluorés, les sels de sulfonate perfluorés, les sels de sulfonate hydrofluorés, les sels de sulfate perfluorés, les sels de sulfate hydrofluorés, les sels d'éthersulfonate perfluorés, les sels d'éther sulfonate hydrofluorés, les sels d'alkylammoniums perfluorés, les sels d'alkylammoniums hydrofluorés, les sels de dialkylimidazoliums perfluorés, les sels de dialkylimidazoliums hydrofluorés, les sels d'alkylphosphoniums perfluorés, les sels d'alkylphosphoniums hydrofluorés, les sels de dialkyloxazolidinium perfluorés (perfluorodialkyloxazolidinium), les sels de dialkyloxazolidinium hydrofluorés, les sels de dialkyl-1-aza-3,5-dioxacyclohexane perfluorés, les sels de dialkyl-1-aza-3,5-dioxacyclohexane hydrofluorés, les sels d'alkylborates perfluorés, les sels d'alkylborates hydrofluorés, les sels de dialkyldiboracyclopentadiènes perfluorés, les sels de dialkyldiboracyclopentadiènes hydrofluorés, les sels de dialkyloxaboralidinium perfluorés, les sels de dialkyloxaboralidinium hydrofluorés, les sels de dialkyl-1-bora-3,5-dioxacyclohexane perfluorés (perfluorodialkyl-1-bora-3,5-dioxacyclohexane), les sels de dialkyl-1-bora-3,5-dioxacyclohexane hydrofluorés, les sels de formule :

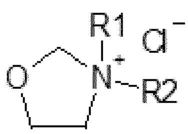

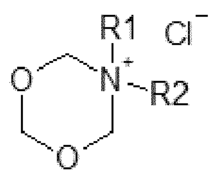

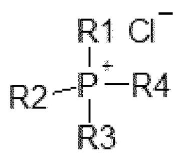

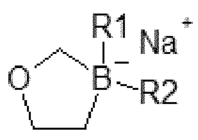

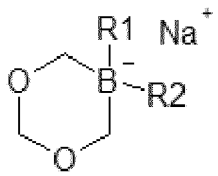

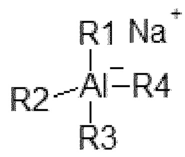

où RI, R2, R3, and R4, choisi indépendamment parmi les groupes suivants:-((CH2)2(CF2)5F), -((CH2)3(CF2)4F), -((CH2)(CF2)5F), -((CH2)2(CF2)4F), -((CF2)5F),-((CH2(CF2)4F), -((CF2)6F), -((CF2)4F), -((CH2)(CF2)6F), -((CH2)2(CF2)F),-((CH2)3(CF2)5F), -((CH2)3(CF2)6F), -((CF2CF20)2CF3) et -CH3 ; et leurs mélanges ;
ledit liquide fluoré non miscible à l'eau étant constitué par un composé de formule brute $C_nH_mF_pN_qO_xS_y$, dans laquelle :

- C, H, F, N, O, S représentent respectivement un atome de carbone, d'hydrogène, de fluor, d'azote, d'oxygène et de soufre,

  - n est un nombre entier compris entre 3 et 25, de préférence entre 3 et 12, bornes incluses,
  - m est un nombre entier compris entre 1 et 27, de préférence entre 1 et 20, bornes incluses,
  - p est un nombre entier compris entre 5 et 54, de préférence entre 5 et 27, bornes incluses,
  - q est un nombre entier compris entre 0 et 6, de préférence entre 0 et 3, bornes incluses,
  - x est un nombre entier compris entre 0 et 10, de préférence entre 0 et 7, bornes incluses, et
  - y est un nombre entier compris entre 0 et 6, de préférence entre 0 et 3, bornes incluses,

pour le prétraitement d'eau saline.

## Patentansprüche

**1.** Verfahren zur Vorbehandlung von Salzwasser unter Verwendung einer Vorbehandlungseinheit, die einen Direktkontakt-Ionenaustauscher mit einer kontinuierlichen oder dispergierten fluorierten Phase umfasst, der eine mit Wasser nicht mischbare fluorierte Flüssigkeit mit einer Dichte von mehr als 1,25 und eine fluorierte Ionenaustauschflüssigkeit beinhaltet, wobei das Verfahren die folgenden Schritte umfasst

- Einführen der fluorierten Phase an einem oberen Ende eines der Teile des Austauschers (1) und Einführen des Wassers (2) an einem unteren Ende (5) eines der Teile des Austauschers (1), um einen Gegenstrom-Ionenaustausch zwischen dem steigenden Wasser (2) und der fallenden fluorierten Phase (7) durchzuführen, und
- Rückgewinnung von vorbehandeltem Wasser (30),

wobei die fluorierte Ionenaustauschflüssigkeit eine ionische fluorierte Verbindung umfasst, ausgewählt aus der Gruppe, bestehend aus
perfluorierten Carboxylatsalzen, hydrofluorierten Carboxylatsalzen, perfluorierten Alkoxidsalzen, hydrofluorierten Alkoxidsalzen, perfluorierten Dialkoxidsalzen, hydrofluorierten Dialkoxidsalzen, perfluorierten Carboximidatsalzen, hydrofluorierten Carboximidatsalzen, perfluorierten Sulfonatsalzen, hydrofluorierten Sulfonatsalzen, perfluorierten Sulfatsalzen, hydrofluorierten Sulfatsalzen, perfluorierten Ethersulfonatsalzen, hydrofluorierten Ethersulfonatsalzen, perfluorierten Alkylammoniumsalzen, hydrofluorierten Alkylammoniumsalzen, perfluorierten Dialkylimidazoliumsalzen, hydrofluorierten Dialkylimidazoliumsalzen, perfluorierten Alkylphosphoniumsalzen, hydrofluorierten Alkylphosphoniumsalzen, perfluorierten Dialkyloxazolidiniumsalzen (Perfluordialkyloxazolidinium), hydrofluorierten Dialkyloxazolidiniumsalzen, perfluorierten Dialkyl-1-aza-3,5-dioxacyclohexansalzen, hydrofluorierten Dialkyl-1-aza-3,5-dioxacyclohexansalzen, perfluorierten Alkylboratsalzen, hydrofluorierten Alkylboratsalzen, perfluorierten Dialkyldiboracyclopentadiensalzen, hydrofluorierten Dialkyldiboracyclopentadiensalzen, perfluorierten Dialkyloxaboralidiniumsalzen, hydrofluorierten Dialkyloxaboralidiniumsalzen, perfluorierten Dialkyl-1-bora-3,5-dioxacyclohexansalzen (Perfluordialkyl-1-bora-3,5-dioxacyclo-hexan), hydrofluorierten Dialkyl-1-bora-3,5-dioxacyclohexan-salzen, Salzen der Formel

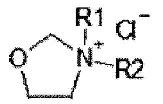 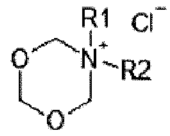 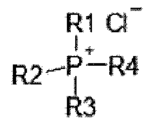

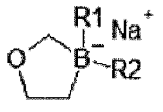 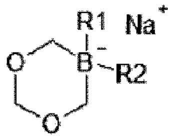 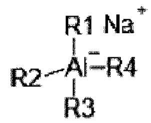

wobei R1, R2, R3 und R4 unabhängig ausgewählt sind aus den folgenden Gruppen -((CH2)2(CF2)5F), -((CH2)3(CF2)4F), -((CH2)(CF2)5F), -((CH2)2(CF2)4F), -((CF2)5F), -((CH2(CF2)4F), -((CF2)6F), -((CF2)4F), -((CH2)(CF2)6F), -((CH2)2(CF2)F), -((CH2)3(CF2)5F), -((CH2)3(CF2)6F), -((CF2CF2O)2CF3) und -CH3 und Gemischen davon,

wobei die mit Wasser nicht mischbare fluorierte Flüssigkeit aus einer Verbindung der empirischen Formel $C_nH_mF_p$-$N_qO_xS_y$ besteht, worin

C, H, F, N, O, S jeweils ein Kohlenstoff-, Wasserstoff-, Fluor-, Stickstoff-, Sauerstoff- und Schwefelatom darstellen,

n eine ganze Zahl zwischen 3 und 25, vorzugsweise zwischen 3 und 12, einschließlich der Grenzen, ist

m eine ganze Zahl zwischen 1 und 27, vorzugsweise zwischen 1 und 20, einschließlich der Grenzen, ist

p eine ganze Zahl zwischen 5 und 54, vorzugsweise zwischen 5 und 27, einschließlich der Grenzen, ist

q eine ganze Zahl zwischen 0 und 6, vorzugsweise zwischen 0 und 3, einschließlich der Grenzen, ist

x eine ganze Zahl zwischen 0 und 10, vorzugsweise von 0 bis 7, einschließlich der Grenzen, ist und

y eine ganze Zahl zwischen 0 und 6, vorzugsweise zwischen 0 und 3, einschließlich der Grenzen, ist.

2. Verfahren nach Anspruch 1, wobei die fluorierte Ionenaustauscherflüssigkeit eine kationische fluorierte Austauschflüssigkeit und/oder eine anionische fluorierte Austauschflüssigkeit umfasst, vorzugsweise die fluorierte anionische Austauschflüssigkeit einen kationischen polaren Kopf umfasst, der ein Heteroatom von Stickstoff und/oder Phosphor und/oder Sauerstoff und/oder Schwefel umfasst und/oder die fluorierte kationische Austauschflüssigkeit einen anionischen polaren Kopf umfasst, der ein Heteroatom von Bor und/oder Aluminium und/oder Sauerstoff und/oder Schwefel umfasst.

3. Verfahren nach Anspruch 1 oder 2, wobei die fluorierte Ionenaustauschverbindung mindestens eine Verbindung umfasst, ausgewählt aus der Gruppe, bestehend aus Hydrofluoralkylammonium, Hydrofluordialkylimidazolium-, Hydrofluoralkylborat-, Hydrofluordialkylcyclopentadiendiborat-, Hydrofluorcarboxylat-, Hydrofluorsulfonat- und Hydrofluoraluminiumsalzen sowie Hydrofluorphosphonium mit der folgenden Formel

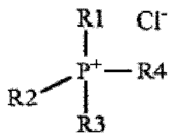 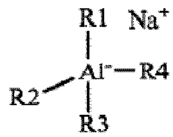

worin R1, R2, R3 und R4 unabhängig voneinander aus den folgenden Gruppen ausgewählt sind: -((CH2)2(CF2)5F), -((CH2)3(CF2)4F), -((CH2)(CF2)5F), -((CH2)2(CF2)4F), -((CF2)5F), -((CH2(CF2)4F))) -(CF2)6F), -((CF2)4F), -((CH2)(CF2)6F), -((CH2)2(CF2)F), -((CH2)3(CF2)5F), -((CH2)3(CF2)6F), -((CF2CF2O)2CF3) und -CH3.

4. Verfahren nach einem der Ansprüche 1 bis 3, wobei die fluorierte Ionenaustauschverbindung mindestens eine Verbindung umfasst, ausgewählt aus den folgenden Verbindungen 1-Ethyl-3-methylimidazolium-bis(trifluormethylsulfonyl)imid, 1-Butyl-1-methylpyrrolidinium-bis(trifluormethylsulfonyl)imid, 1-Butyl-3-methylpyridinium-bis(trifluormethylsulfonyl)imid und 1-Ethyl-3-methylimidazolium-bis(pentafluorethyl-sulfonyl)imid.

5. Verfahren nach einem der Ansprüche 1 bis 4, umfassend zusätzlich,
einen Schritt zur Einführung der fluorierten Phase in kontinuierlicher Form und wobei die Einführung von Wasser (2) in dispergierter Form erfolgt.

6. Verfahren nach einem der Ansprüche 1 bis 5, weiter umfassend einen Schritt des Einführens der fluorierten Phase

in dispergierter Form und wobei die Einführung von Wasser (2) in kontinuierlicher Form erfolgt.

**7.** Verfahren nach einem der Ansprüche 1 bis 6, weiter umfassend die folgenden Schritte.

- Rückgewinnung der fluorierten Phase (21), die am unteren Ende (5) eines ersten Austauschers (1), bekannt als Vorbehandlung, erhalten wird,
- Einführen der rückgewonnenen fluorierten Phase (21) an einem oberen Ende (22) eines der Teile eines zweiten Wärmetauschers (20), bekannt als Regeneration, der Vorbehandlungseinheit,
- Einleiten von Regenerationswasser (19A, 23) an einem unteren Ende (24) eines der Teile des Regenerationsaustauschers (20), um einen Gegenstrom-Ionenaustausch zwischen dem aufwärts gerichteten Regenerationswasser (19A, 23) und der abwärts gerichteten fluorierten Phase (21) zu erreichen,
- Rückgewinnung der regenerierten fluorierten Phase (18) und
- Einführung der regenerierten fluorierten Phase (18) an einem oberen Teil (14) des Vorbehandlungsaustauschers (1).

**8.** Wasserbehandlungsverfahren, umfassend das Vorbehandlungsverfahren nach einem der Ansprüche 1 bis 7 und weiter einen Entsalzungsbehandlungsschritt nach dem Vorbehandlungswasserrückgewinnungsschritt (30).

**9.** Verfahren nach dem vorangehenden Anspruch, wobei das Regenerationswasser (19A, 23) das entsalzte Wasser (23) während des Behandlungsschritts (19A, 23) zumindest teilweise umfasst.

**10.** Salzwasservorbehandlungseinheit, umfassend einen Ionenaustauscher mit direktem Kontakt nach einem der Ansprüche 1 bis 9, wobei der Austauscher (1) eine Säule und eine fluorierte Phase umfasst, wobei die fluorierte Phase wie in den Ansprüchen 1 bis 9 beschrieben ist.

**11.** Verwendung eines Direktkontaktaustauschers, enthaltend eine kontinuierliche oder dispergierte fluorierte Phase, die eine mit Wasser nicht mischbare fluorierte Flüssigkeit mit einer Dichte von mehr als 1,25 und eine mit Ionenaustausch fluorierte Flüssigkeit umfasst, wobei die mit Ionenaustausch fluorierte Flüssigkeit eine ionische fluorierte Verbindung umfasst, ausgewählt aus der Gruppe, bestehend aus perfluorierten Carboxylatsalzen, hydrofluorierten Carboxylatsalzen, perfluorierten Alkoxidsalzen, hydrofluorierten Alkoxidsalzen, perfluorierten Dialkoxidsalzen, hydrofluorierten Dialkoxidsalzen, perfluorierten Carboximidatsalzen, hydrofluorierten Carboximidatsalzen, perfluorierten Sulfonatsalzen, hydrofluorierten Sulfonatsalzen, perfluorierten Sulfatsalzen, hydrofluorierten Sulfatsalzen, perfluorierten Ethersulfonatsalzen, hydrofluorierten Ethersulfonatsalzen, perfluorierten Alkylammoniumsalzen, hydrofluorierten Alkylammoniumsalzen, perfluorierten Dialkylimidazoliumsalzen, hydrofluorierten Dialkylimidazoliumsalzen, perfluorierten Alkylphosphoniumsalzen, hydrofluorierten Alkylphosphoniumsalzen, perfluorierten Dialkyloxazolidiniumsalzen (Perfluordialkyloxazolidinium), hydrofluorierten Dialkyloxazolidiniumsalzen, perfluorierten Dialkyl-1-aza-3,5-dioxacyclohexansalzen, hydrofluorierten Dialkyl-1-aza-3,5-dioxacyclohexansalzen, perfluorierten Alkylboratsalzen, hydrofluorierten Alkylboratsalzen, perfluorierten Dialkyldiboracyclopentadiensalzen, hydrofluorierten Dialkyldiboracyclopentadiensalzen, perfluorierten Dialkyloxaboralidiniumsalzen, hydrofluorierten Dialkyloxaboralidiniumsalzen, perfluorierten Dialkyl-1-bora-3,5-dioxacyclohexansalzen (Per-fluordialkyl-1-bora-3,5-dioxacyclohexan), hydrofluorierten Dialkyl-1-bora-3,5-dioxacyclohexansalzen, Salzen der Formel

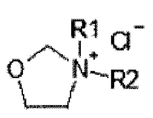 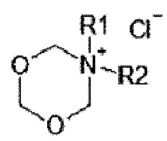 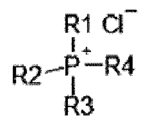

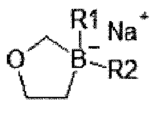 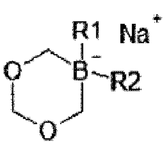 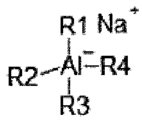

worin R1, R2, R3 und R4 unabhängig voneinander ausgewählt sind aus den folgenden Gruppen -((CH2)2(CF2)5F), -((CH2)3(CF2)4F), -((CH2)(CF2)5F), -((CH2)2(CF2)4F), -((CF2)5F), -((CH2(CF2)4F), -((CF2)6F), -((CF2)4F), -((CH2)(CF2)6F), -((CH2)2(CF2)F), -((CH2)3(CF2)5F), -((CH2)3(CF2)6F), -((CF2CF2O)2CF3) und -CH3 und Gemischen davon, wobei die mit Wasser nicht mischbare fluorierte Flüssigkeit eine Verbindung der empirischen Formel

$C_nH_mF_pN_qO_xS_y$ ist, worin

- C, H, F, N, O, S jeweils ein Kohlenstoff-, Wasserstoff-, Fluor-, Stickstoff-, Sauerstoff- und Schwefelatom darstellen,
- n eine ganze Zahl zwischen 3 und 25, vorzugsweise zwischen 3 und 12, einschließlich der Grenzen, ist
- m eine ganze Zahl zwischen 1 und 27, vorzugsweise zwischen 1 und 20, einschließlich der Grenzen, ist
- p eine ganze Zahl zwischen 5 und 54, vorzugsweise zwischen 5 und 27, einschließlich der Grenzen, ist
- q eine ganze Zahl zwischen 0 und 6, vorzugsweise zwischen 0 und 3, einschließlich der Grenzen, ist
- x eine ganze Zahl zwischen 0 und 10, vorzugsweise von 0 und 7, einschließlich der Grenzen, ist und
- y eine ganze Zahl zwischen 0 und 6, vorzugsweise zwischen 0 und 3, einschließlich der Grenzen, ist

für die Vorbehandlung von Salzwasser.

## Claims

**1.** A process for pretreating saline water implementing a pretreatment unit comprising a direct contact ion exchanger configured to contain a continuous or dispersed fluorinated phase comprising a water-immiscible fluorinated liquid having a relative density greater than 1.25, and a fluorinated ion exchange liquid, said process comprising the following steps:

- introducing the fluorinated phase at an upper end of one of the parts of the exchanger (1) and introducing water (2), at a lower end (5) of one of the parts of the exchanger (1) in order to carry out countercurrent ion exchange between the ascending water (2) and the descending fluorinated phase (7), and
- recovering the pretreated water (30),

said ion exchange fluorinated liquid comprising an ionic fluorinated compound selected from the group consisting of:

perfluorinated carboxylate salts, hydrofluorinated carboxylate salts, perfluorinated alkoxide salts, hydrofluorinated alkoxide salts, perfluorinated dialkoxide salts, hydrofluorinated dialkoxide salts, perfluorinated carboximidate salts, hydrofluorinated carboximidate salts, perfluorinated sulfonate salts, hydrofluorinated sulfonate salts, perfluorinated sulfate salts, hydrofluorinated sulfate salts, perfluorinated ether sulfonate salts, hydrofluorinated ether sulfonate salts, perfluorinated alkylammonium salts, hydrofluorinated alkylammonium salts, perfluorinated dialkylimidazolium salts, hydrofluorinated dialkylimidazolium salts, perfluorinated alkylphosphonium salts, hydrofluorinated alkylphosphonium salts, perfluorinated dialkyloxazolidinium salts (perfluorodialkyloxazolidinium), hydrofluorinated dialkyloxazolidinium salts, perfluorinated dialkyl-1-aza-3,5-dioxacyclohexane salts, hydrofluorinated dialkyl-1-aza-3,5-dioxacyclohexane salts, perfluorinated alkylborate salts, hydrofluorinated alkylborate salts, perfluorinated dialkyldiboracyclopentadiene salts, hydrofluorinated dialkyldiboracyclopentadiene salts, perfluorinated dialkyloxaboralidinium salts, hydrofluorinated dialkyloxaboralidinium salts, perfluorinated dialkyl-1-bora-3,5-dioxacyclohexane salts (perfluorodialkyl-1-bora-3,5-dioxacyclohexane), hydrofluorinated dialkyl-1-bora-3,5-dioxacyclohexane salts, the salts of formula

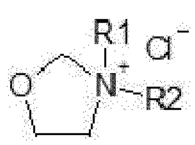
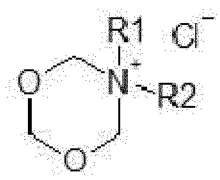
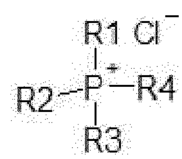

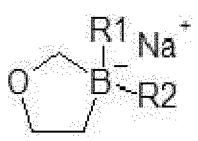
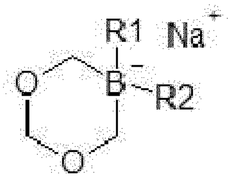
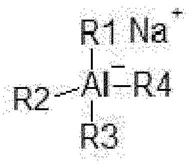

where R1, R2, R3, and R4, are selected independently from the following groups: $-((CH_2)_2(CF_2)_5F)$, $-((CH_2)_3(CF_2)_4F)$, $-((CH_2)(CF_2)_5F)$, $-((CH_2)_2(CF_2)_4F)$, $-((CF_2)_5F)$, $-((CH_2(CF_2)_4F)$, $-((CF_2)_6F)$, $-((CF_2)_4F)$,

$-((CH_2)(CF_2)_6F)$, -((CH2)2(CF2)F), $-((CH_2)_3(CF_2)_5F)$, $-((CH_2)_3(CF_2)_6F)$,$-((CF_2CF_2O)_2CF_3)$ and $-CH_3$, and their mixtures,
said water-immiscible fluorinated liquid having a formula $C_nH_mF_pN_qO_xS_y$, wherein:
C, H, F, N, O, S respectively represent a carbon, hydrogen, fluorine, nitrogen, oxygen and sulphur atom,
n is an integer in the range 3 to 25, preferably in the range 3 to 12, limits included,
m is an integer in the range 1 to 27, preferably in the range 1 to 20, limits included,
p is an integer in the range 5 to 54, preferably in the range 5 to 27, limits included,
q is an integer in the range 0 to 6, preferably in the range 0 to 3, limits included,
x is an integer in the range 0 to 10, preferably in the range 0 to 7, limits included, and
y is an integer in the range 0 to 6, preferably in the range 0 to 3, limits included.

**2.** The process according to claim 1, wherein the fluorinated ion exchange liquid comprises a fluorinated cation exchange liquid and/or a fluorinated anion exchange liquid, preferably, the fluorinated anion exchange liquid comprises a cationic polar head comprising a nitrogen and/or phosphorus and/or oxygen and/or sulphur heteroatom and/or the fluorinated cation exchange liquid comprises an anionic polar head comprising a boron and/or aluminium and/or oxygen and/or sulphur heteroatom.

**3.** The process according to claim 1 or 2, wherein said fluorinated ion exchange compound comprises at least one compound selected from the group consisting of hydrofluoroalkylammonium, hydrofluorodialkylimidazolium, hydrofluoroalkylborate, hydrofluorodialkylcyclopentadiene diborate, hydrofluorocarboxylate, hydrofluorosulfonate and hydrofluoroaluminium salts as well as hydrofluorophosphonium salts having the following formula:

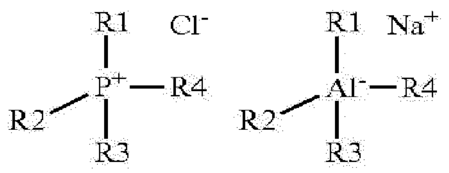

where R1, R2, R3, and R4, are selected independently from the following groups: $-((CH_2)_2(CF_2)_5F)$, $-((CH_2)_3(CF_2)_4F)$, $-((CH_2)(CF_2)_5F)$, $-((CH_2)_2(CF_2)_4F)$, $-((CF_2)_5F)$, $-((CH_2(CF_2)_4F)$, $-((CF_2)_6F)$, $-((CF_2)_4F)$, $-((CH_2)(CF_2)_6F)$, $-((CH_2)_2(CF_2)F)$, $-((CH_2)_3(CF_2)_5F)$, $-((CH_2)_3(CF_2)_6F)$,$-((CF_2CF_2O)_2CF_3)$ and $-CH_3$.

**4.** The process according to any one of claims 1 to 3, wherein the fluorinated ion exchange compound comprises at least one compound selected from the following compounds: 1-ethyl-3-methylimidazolium bis(trifluoromethylsulfonyl)imide, 1-Butyl-1-methylpyrrolidinium bis(trifluoromethylsulfonyl)imide, 1-butyl-3-methylpyridinium bis(trifluoromethylsulphonyl)imide and 1-ethyl-3-methylimidazolium bis(pentafluoroethylsulfonyl)imide.

**5.** The process according to any one of claims 1 to 4, further comprising a step wherein the fluorinated phase is introduced in continuous form and wherein the water (2) is introduced in dispersed form.

**6.** The process according to any one of claims 1 to 5, further comprising a step wherein the fluorinated phase is introduced in dispersed form and wherein the water (2) is introduced in continuous form.

**7.** The process according to any one of claims 1 to 6, further comprising the following steps:

- recovering the fluorinated phase (21) obtained at the lower end (5) of a first exchanger (1), called a pretreatment exchanger,
- introducing the recovered fluorinated phase (21) at an upper end (22) of one of the parts of a second exchanger (20), called a regeneration exchanger, of the pretreatment unit,
- introducing regeneration water (19A, 23) at a lower end (24) of one of the parts of the regeneration exchanger (20) in order to carry out countercurrent ion exchange between the ascending regeneration water (19A, 23) and the descending recovered fluorinated phase (21),
- recovering the regenerated fluorinated phase (18), and
- introducing the regenerated fluorinated phase (18) at an upper end(14) of the pretreatment exchanger (1).

**8.** A process for treating water, comprising the pretreatment process according to any one of claims 1 to 7 and further comprising a step of treatment by desalination subsequent to the pretreated water recovery stage (30).

**9.** A process according to the preceding claim, wherein the regeneration water (19A, 23) comprises at least partly desalinated water (23) during the treatment step (19A, 23).

**10.** A saline water pretreatment unit, comprising a direct contact ion exchanger as described in any one of claims 1 to 9, said exchanger (1) comprising a column and a fluorinated phase, said fluorinated phase being as described in claims 1 to 9.

**11.** Use of a direct contact exchanger comprising a continuous or dispersed fluorinated phase which comprises a water-immiscible fluorinated liquid having a relative density greater than 1.25, and a fluorinated ion exchange liquid, said fluorinated ion exchange liquid comprising an ionic fluorinated compound selected from the group consisting of perfluorinated carboxylate salts, hydrofluorinated carboxylate salts, perfluorinated alkoxide salts, hydrofluorinated alkoxide salts, perfluorinated dialkoxide salts, hydrofluorinated dialkoxide salts, perfluorinated carboximidate salts, hydrofluorinated carboximidate salts, perfluorinated sulfonate salts, hydrofluorinated sulfonate salts, perfluorinated sulfate salts, hydrofluorinated sulfate salts, perfluorinated ether sulfonate salts, hydrofluorinated ether sulfonate salts, perfluorinated alkylammonium salts, hydrofluorinated alkylammonium salts, perfluorinated dialkylimidazolium salts, hydrofluorinated dialkylimidazolium salts, perfluorinated alkylphosphonium salts, hydrofluorinated alkylphosphonium salts, perfluorinated dialkyloxazolidinium salts (perfluorodialkyloxazolidinium), hydrofluorinated dialkyloxazolidinium salts, perfluorinated dialkyl-1-aza-3,5-dioxacyclohexane salts, hydrofluorinated dialkyl-1-aza-3,5-dioxacyclohexane salts, perfluorinated alkylborate salts, hydrofluorinated alkylborate salts, perfluorinated dialkyldiboracyclopentadiene salts, hydrofluorinated dialkyldiboracyclopentadiene salts, perfluorinated dialkyloxaboralidinium salts, hydrofluorinated dialkyloxaboralidinium salts, perfluorinated dialkyl-1-bora-3,5-dioxacyclohexane salts (perfluorodialkyl-1-bora-3,5-dioxacyclohexane), hydrofluorinated dialkyl-1-bora-3,5-dioxacyclohexane salts, the salts of formula:

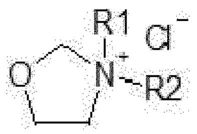
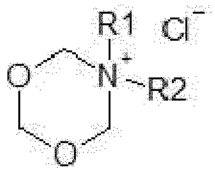
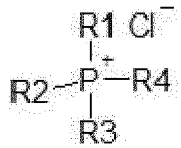

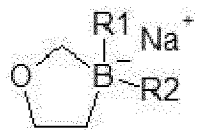
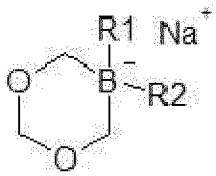
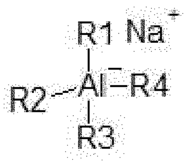

where R1, R2, R3, and R4, are selected independently from the following groups: $-((CH_2)_2(CF_2)_5F)$, $-((CH_2)_3(CF_2)_4F)$, $-((CH_2)(CF_2)_5F)$, $-((CH_2)_2(CF_2)_4F)$, $-((CF_2)_5F)$,$-((CH_2(CF_2)_4F)$, $-((CF_2)_6F)$, $-((CF_2)_4F)$, $-((CH_2)(CF_2)_6F)$, $-((CH_2)_2(CF_2)F)$, $-((CH_2)_3(CF_2)_5F)$,$-((CH_2)_3(CF_2)_6F)$, $-((CF_2CF_2O)_2CF_3)$ and $-CH_3$ ; and their mixtures,
said water-immiscible fluorinated liquid consisting of a compound of empirical formula $C_nH_mF_pN_qO_xS_y$, wherein:

- C, H, F, N, O, S respectively represent a carbon, hydrogen, fluorine, nitrogen, oxygen and sulphur atom,
- n is an integer in the range 3 to 25, preferably in the range 3 to 12, limits included,
- m is an integer in the range 1 to 27, preferably in the range 1 to 20, limits included,
- p is an integer in the range 5 to 54, preferably in the range 5 to 27, limits included,
- q is an integer in the range 0 to 6, preferably in the range 0 to 3, limits included,
- x is an integer in the range 0 to 10, preferably in the range 0 to 7, limits included, and
- y is an integer in the range 0 to 6, preferably in the range 0 to 3, limits included,

for the pretreatment of saline water.

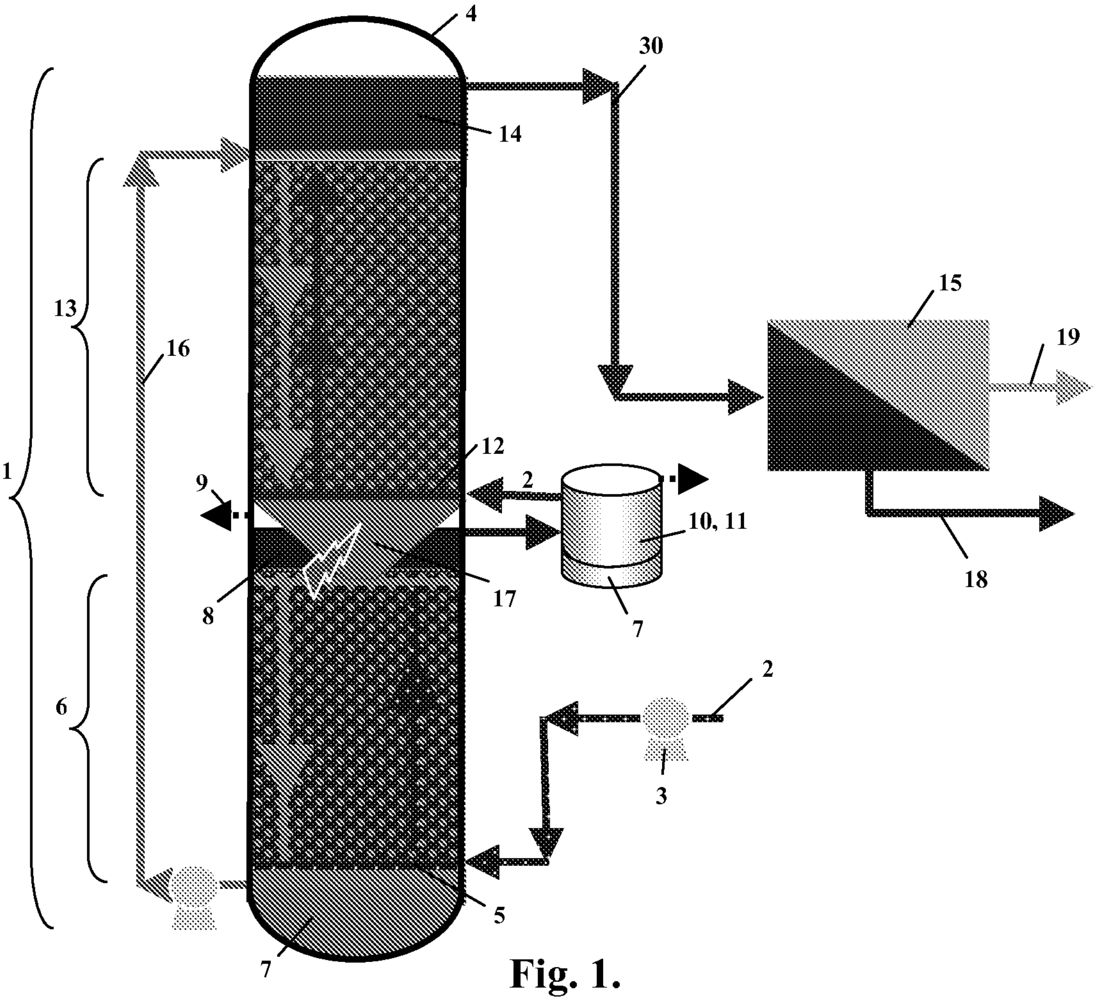


Fig. 1.

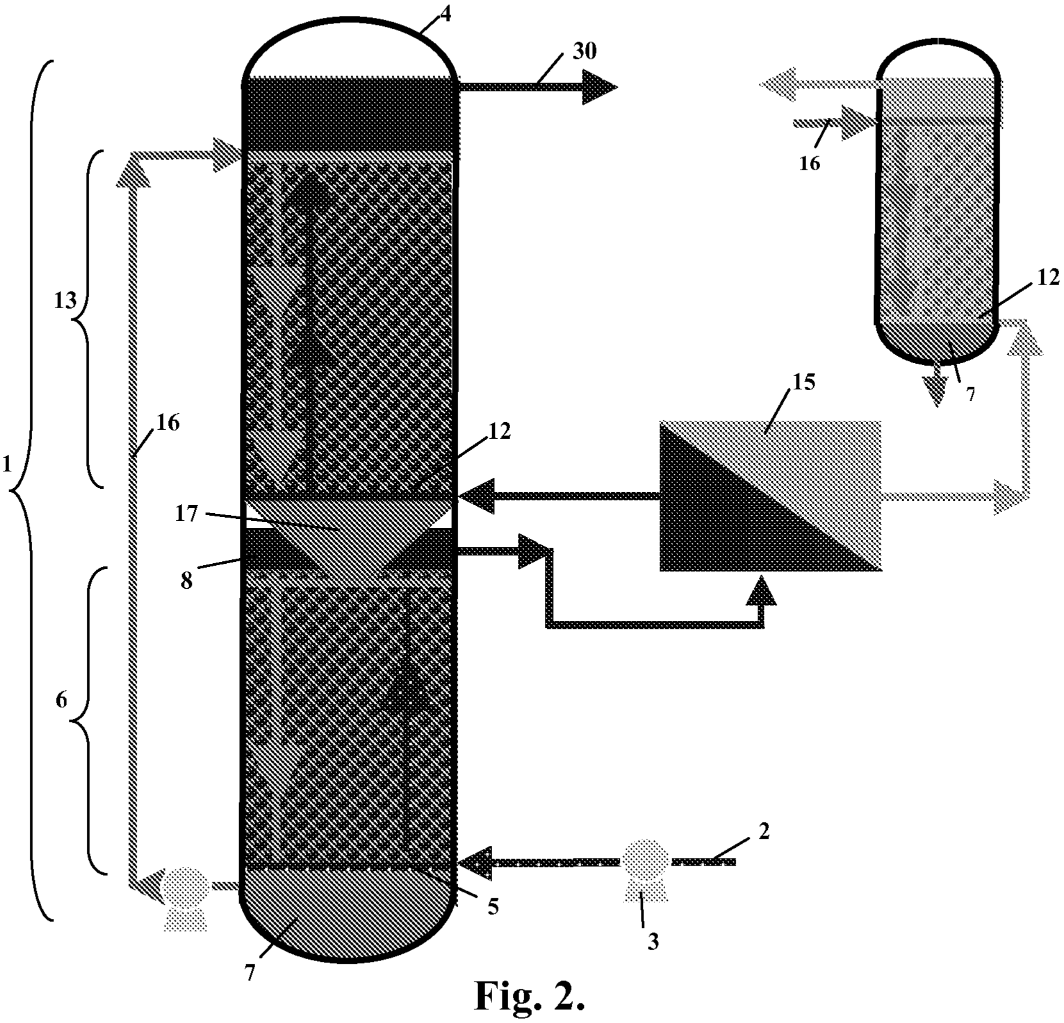


Fig. 2.

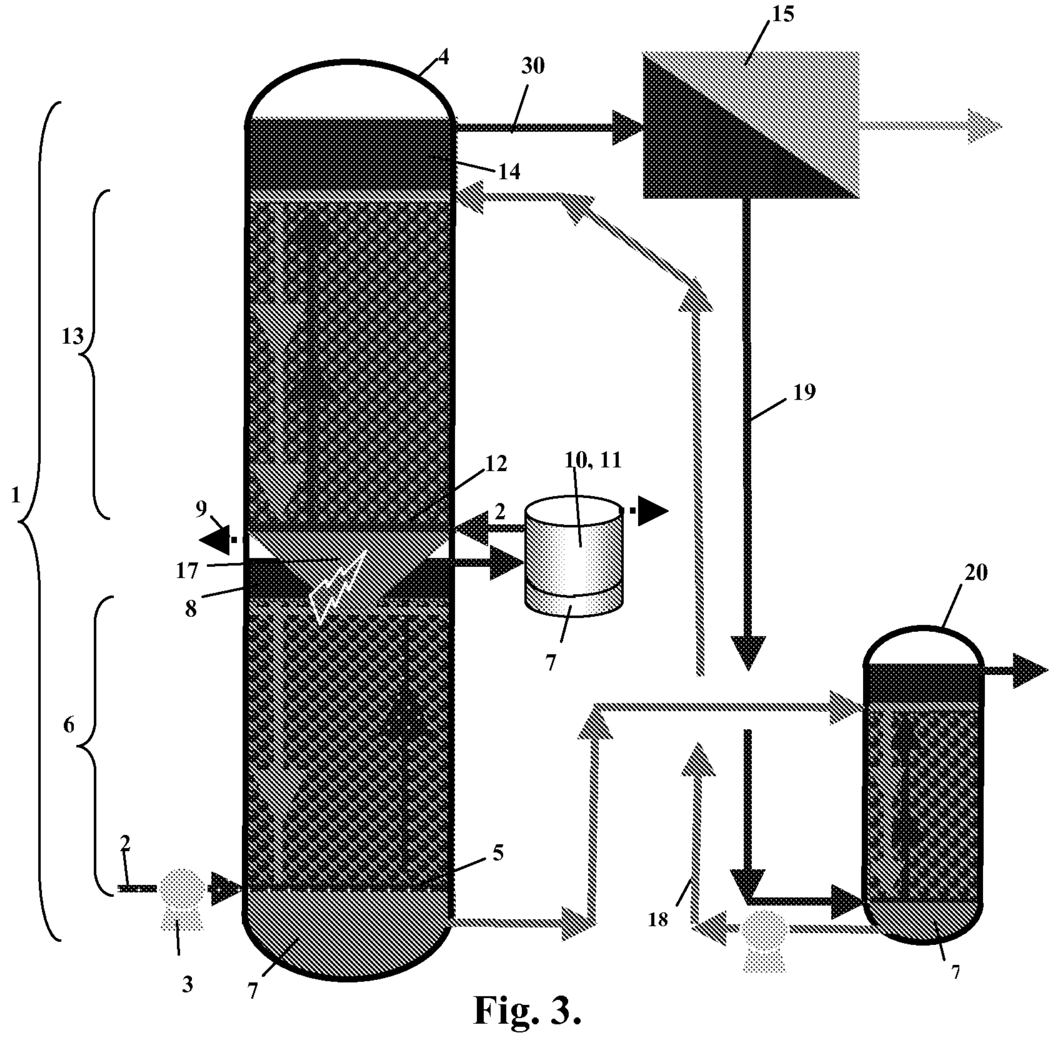


Fig. 3.

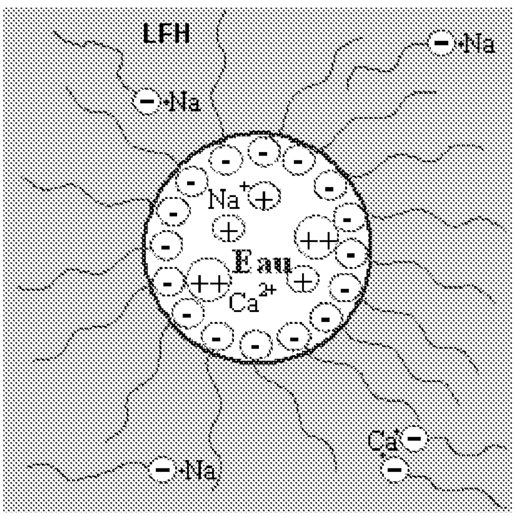


Fig. 4.

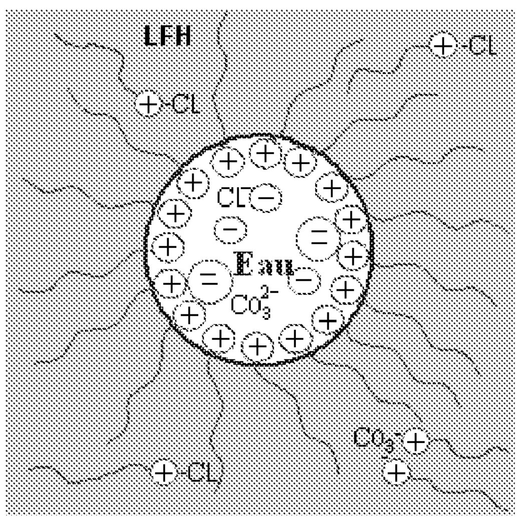


Fig. 5.

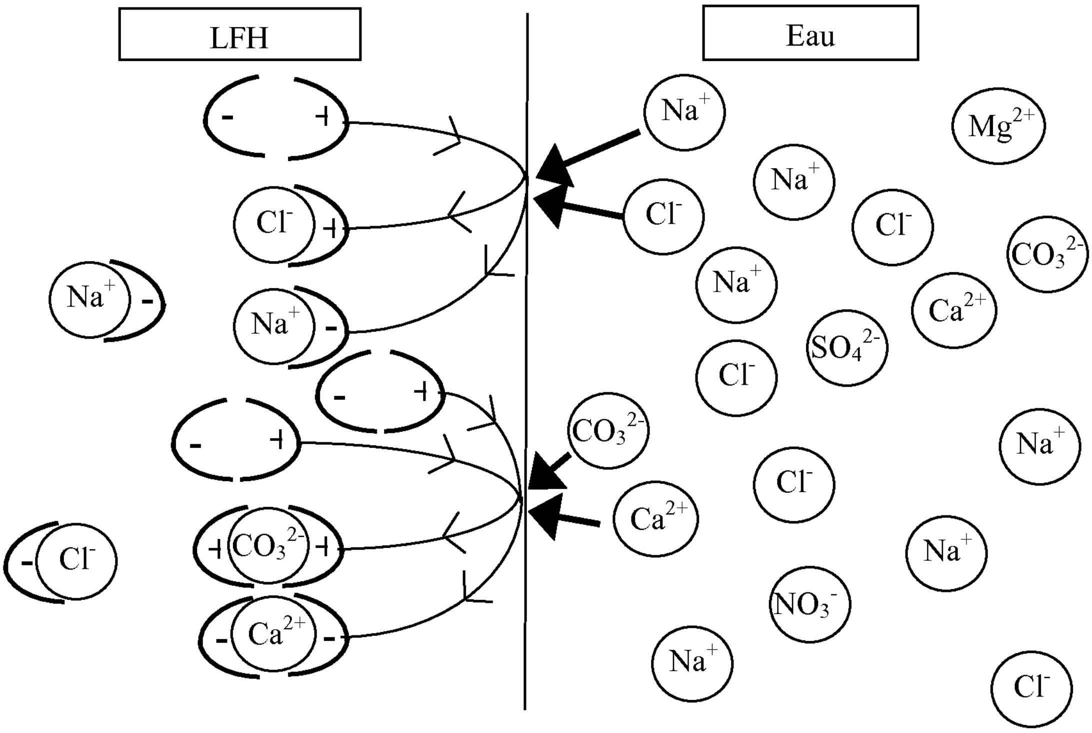


**Fig. 6**

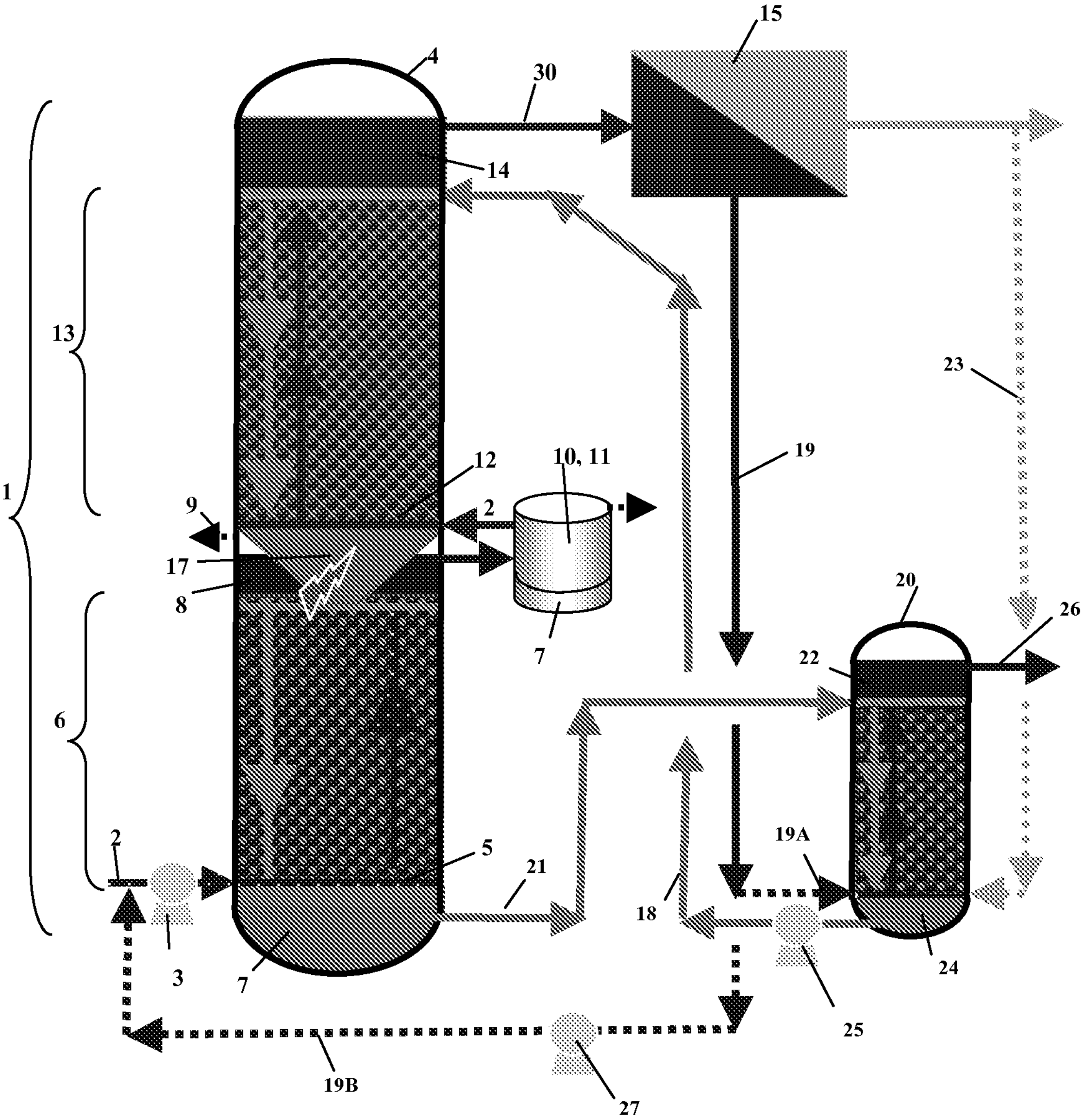

1
2
3
4
5
6
7
8
9
10, 11
12
13
14
15
17
18
19
19A
19B
20
21
22
23
24
25
26
27
30


**Fig. 7**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description

- US 4238296 A